# EUROPEAN PATENT APPLICATION

(11) **EP 4 787 134 A1**
(43) Date of publication of application: **05.08.2026**
(21) Application number: 24887474.5
(22) Date of filing: 23.07.2024
(51) Int. Cl.: G06F 3/0481

(54) **WALLPAPER DISPLAY METHOD AND ELECTRONIC DEVICE**

(30) Priority: 08.11.2023 CN 202311485079; 29.12.2023 CN 202311865219
(71) Applicant: Honor Device Co., Ltd., Shenzhen, Guangdong 518040 (CN)
(72) Inventor: CHEN, Zhuoran, Shenzhen, Guangdong 518040 (CN); JIAO, Junting, Shenzhen, Guangdong 518040 (CN); ZHANG, Taolin, Shenzhen, Guangdong 518040 (CN)
(74) Representative: Gill Jennings & Every LLP
(86) International application number: PCT/CN2024/107056
(87) International publication number: WO 2025/097851

(57) **Abstract**

This application discloses a wallpaper display method and an electronic device, and relates to the field of terminal technologies. A wallpaper such as a lock screen wallpaper or a home screen wallpaper is generated through layout arrangement of a picture and a mask frame with a geometrical shape, to implement a visual effect that a part of a main object in the picture extends beyond an edge of the geometrical shape of the mask frame, that is, implement an "out-of-frame" display effect, so that visual three-dimensional space is created in two-dimensional space, thereby providing a three-dimensional and unique wallpaper.

## Description

This application claims priority to Chinese Patent Application No. 202311485079.7, filed with the China National Intellectual Property Administration on November 8, 2023 and entitled "LOCK SCREEN WALLPAPER INTERACTION METHOD AND ELECTRONIC DEVICE", and Chinese Patent Application No. 202311865219.3, filed with the China National Intellectual Property Administration on December 29, 2023 and entitled "WALLPAPER DISPLAY METHOD AND ELECTRONIC DEVICE", which are incorporated herein by reference in their entireties.

### TECHNICAL FIELD

This application relates to the field of terminal technologies, and in particular, to a wallpaper display method and an electronic device.

### BACKGROUND

Usually, an electronic device displays wallpapers in some scenarios, for example, a home screen wallpaper and a lock screen wallpaper. With popularity of electronic devices such as a mobile phone and a tablet computer, wallpaper styles and forms are increasingly diversified, which greatly enriches user experience.

How to meet requirements of a user for unique and personalized wallpapers is a problem that needs to be resolved.

### SUMMARY

Embodiments of this application provide a wallpaper display method and an electronic device, to create visual three-dimensional space in two-dimensional space, thereby providing a three-dimensional and unique wallpaper.

To achieve the foregoing objective, the following technical solutions are used in embodiments of this application.

According to a first aspect, a wallpaper display method is provided. The method includes:
setting a first template as a lock screen wallpaper in a lock screen wallpaper setting interface. Specifically, a first user interface is displayed, where the first user interface includes an icon of the first template; and a second user interface is displayed in response to an operation that a user selects the first template (for example, a tap operation for the icon of the first template), where the second user interface includes a preview region and a first control (for example, an "Apply" button), the preview region is used to display a preview image of a first wallpaper, and the first wallpaper is generated based on the first template. The first wallpaper is set as the lock screen wallpaper in response to an operation that the user selects the first control (for example, a tap operation for the "Apply" button).

A lock screen interface is displayed in response to a lock operation of the user, where the lock screen interface includes the lock screen wallpaper (the first wallpaper).

The first wallpaper includes a first main object and a first mask frame, a first part of the first main object obscures the first mask frame, and a second part of the first main object is obscured by the first mask frame. In this way, a visual effect that a part of the first main object extends beyond an edge of the first mask frame is implemented, that is, an "out-of-frame" display effect is implemented, so that visual three-dimensional space is created in two-dimensional space, thereby providing a three-dimensional and unique wallpaper.

With reference to the first aspect, in a possible implementation, the preview region includes a clock icon. In an implementation, the first part of the first main object obscures the clock icon, to enhance presentation of the first main object with the "out-of-frame" display effect. In another implementation, the first part of the first main object is obscured by the clock icon, to enhance presentation of a clock, thereby facilitating time check of the user.

With reference to the first aspect, in a possible implementation, the first part of the first main object obscures the clock icon when a highest point of the first main object is not higher than a horizontal center line of the clock icon; or the first part of the first main object is obscured by the clock icon when a highest point of the first main object is higher than a horizontal center line of the clock icon.

In this method, when an overlapping region between the first main object and the clock icon is large, the first main object is displayed below the clock icon, to prevent the first main object from excessively obscuring the clock icon, and avoiding affecting time check of the user.

With reference to the first aspect, in a possible implementation, the first main object is zoomed in for display in response to a zoom-in operation performed by the user in the preview region, where the first part of the first main object is obscured by the first mask frame or the first part of the first main object is obscured by the clock icon when the highest point of the first main object is higher than the horizontal center line of the clock icon.

In this method, the user may manually zoom in a main object. When an overlapping region between the main object and the clock icon is large, the main object is displayed below the clock icon, to prevent the main object from excessively obscuring the clock icon, and avoiding affecting time check of the user. Alternatively, when an overlapping region between the main object and the clock icon is large, the "out-of-frame" display effect is canceled, thereby avoiding affecting aesthetics and avoiding affecting time check of the user.

With reference to the first aspect, in a possible implementation, the first main object is moved to a first location in response to a movement operation performed by the user in the preview region, where the first part of the first main object is obscured by the first mask frame or the first part of the first main object is obscured by the clock icon when the highest point of the first main object is higher than the horizontal center line of the clock icon.

In this method, the user may manually move a main object. When an overlapping region between the main object and the clock icon is large, the main object is displayed below the clock icon, to prevent the main object from excessively obscuring the clock icon, and avoiding affecting time check of the user. Alternatively, when an overlapping region between the main object and the clock icon is large, the "out-of-frame" display effect is canceled (the first part of the first main object is obscured by the first mask frame), thereby avoiding affecting aesthetics and avoiding affecting time check of the user.

With reference to the first aspect, in a possible implementation, the first main object is zoomed out for display in response to a zoom-out operation performed by the user in the preview region, where a minimum size to which the first main object is zoomed out is that any edge of a first picture including the first main object is externally in contact with a preset rectangular frame, and a location and a size of the preset rectangular frame are determined based on a geometrical shape of the first mask frame. In this way, it can be ensured that a background image in the first picture fully fills a transparent region other than the geometrical shape of the first mask frame, so that the lock screen wallpaper is more beautiful.

With reference to the first aspect, in a possible implementation, the first part of the first main object is obscured by the first mask frame when the first main object is in contact with a preset region on the first mask frame, that is, the "out-of-frame" display effect is canceled.

In this way, an image of a main object can be prevented from being split at a joint between an upper half frame and a lower half frame of a mask frame because an upper half part of the main object is displayed above the mask frame and a lower half part of the main object is displayed below the mask frame.

With reference to the first aspect, in a possible implementation, the first wallpaper is generated based on the first mask frame and the first picture including the first main object.

In this method, layout arrangement is performed on a picture and a mask frame with a geometrical shape to implement a visual effect that a part of the main object in the picture extends beyond an edge of the geometrical shape of the mask frame.

With reference to the first aspect, in a possible implementation, the first wallpaper includes a first layer, a second layer, a third layer, and a fourth layer, the first layer includes the first picture, the second layer includes a first part of the first mask frame, the third layer includes the first main object, the fourth layer includes a second part of the first mask frame, and the geometrical shape formed by the first part and the second part of the first mask frame is used to accommodate a part of the first main object or the entire first main object.

The third layer is located above the second layer and the fourth layer is located above the third layer when the first part of the first main object obscures the first mask frame; or the second layer and the fourth layer are located above the third layer when the first part of the first main object is obscured by the first mask frame.

With reference to the first aspect, in a possible implementation, the first wallpaper includes a fifth layer, and the fifth layer includes the clock icon. The third layer is located above the fifth layer when the first part of the first main object obscures the clock icon; or the fifth layer is located above the third layer when the first part of the first main object is obscured by the clock icon.

Sequences of the layers are adjusted, so that the first main object obscures the mask frame, the mask frame obscures the first main object, the first main object obscures the clock icon, or the clock icon obscures the first main object.

With reference to the first aspect, in a possible implementation, the method further includes: updating the first mask frame in the first wallpaper to a second mask frame in response to a selection operation performed by the user on the second mask frame.

In this method, the user is supported to replace a mask frame in a template.

With reference to the first aspect, in a possible implementation, the method further includes: displaying a preview image of a second wallpaper in the preview region in response to a selection operation performed by the user on a second picture, where the second wallpaper includes a second main object and the first mask frame, a first part of the second main object obscures the first mask frame, and a second part of the second main object is obscured by the first mask frame.

In this method, the user is supported to replace a picture in a template.

In a possible implementation, if a distance between a highest point of the second main object in the second picture and an upper edge of the second picture is less than a preset value, the second main object is zoomed out to a minimum size when the second wallpaper is generated, where the minimum size is that any edge of the second picture is externally in contact with a preset rectangular frame, and a location and a size of the preset rectangular frame are determined based on a geometrical shape of a mask frame.

In this method, when the distance between the highest point of the main object in the second picture and the upper edge of the picture is less than the preset value, if a lock screen wallpaper with the "out-of-frame" display effect is generated based on the second picture, the main object obscures a large part of the "clock" icon, thus affecting time check of the user. Therefore, when the distance between the highest point of the main object in the second picture and the upper edge of the picture is less than the preset value, the lock screen wallpaper with the "out-of-frame" display effect is not generated, but a layer in which the mask frame is located is located above a layer in which the main object is located, that is, the mask frame obscures the main object in the second picture. To prevent the mask frame from obscuring a large part of the main object, the second main object is zoomed out to the minimum size when the first wallpaper is generated. In this way, an image of a more complete main object in the second picture can be displayed.

With reference to the first aspect, in a possible implementation, the method further includes: zooming in the second main object for display in response to a zoom-in operation performed by the user in the preview region, where the first part of the second main object that is zoomed in obscures the first mask frame. That is, for a picture in which a main object in the picture has a specific defect (for example, the second main object in the second picture is not complete), a lock screen wallpaper with the "out-of-frame" display effect may also be generated based on an operation of the user.

With reference to the first aspect, in a possible implementation, first prompt information is displayed if there is no identifiable main object in the second picture, to prompt the user to replace the picture.

With reference to the first aspect, in a possible implementation, the first mask frame includes a text box. In this way, the user is supported to generate text in the text box based on text entered in a text editing box.

With reference to the first aspect, in a possible implementation, generation of the text in the text box based on the text entered by the user in the text editing box includes: generating supplementary text based on the text entered by the user in the text editing box; and generating the text in the text box based on the text entered by the user in the text editing box and the supplementary text.

With reference to the first aspect, in a possible implementation, the main object includes a character, an animal, a plant, or a building.

With reference to the first aspect, in a possible implementation, the first part is an upper half part, and the second part is a lower half part. That is, a visual effect that a head part of a main object extends beyond a mask frame is generated.

With reference to the first aspect, in a possible implementation, a third user interface is displayed, where the third user interface includes the icon of the first template; a fourth user interface is displayed in response to an operation that the user selects the first template, where the fourth user interface includes a second preview region and a second control, and the second preview region includes the preview image of the first wallpaper; the first wallpaper is set as a home screen wallpaper in response to an operation that the user selects the second control; and a home screen interface is displayed in response to an operation that the user returns to a home screen, where the home screen interface includes the home screen wallpaper.

In this method, the home screen wallpaper with the "out-of-frame" display effect is implemented.

According to a second aspect, an electronic device is provided. The electronic device has functions for implementing the wallpaper display method according to the first aspect. The functions may be implemented by using hardware, or may be implemented by executing corresponding software by hardware. The hardware or the software includes one or more modules corresponding to the functions.

According to a third aspect, an electronic device is provided, including a processor, a memory, and a display screen. The memory is configured to store computer-executable instructions. When the electronic device runs, the processor executes the computer-executable instructions stored in the memory, to enable the electronic device to perform the wallpaper display method according to any possible implementation in the first aspect.

According to a fourth aspect, a computer-readable storage medium is provided. The computer-readable storage medium stores instructions, When the instructions are run on a computer, the computer is enabled to perform the method according to any possible implementation in the first aspect.

According to a fifth aspect, a computer program product including instructions is provided. When the computer program product runs on a computer, the computer is enabled to perform the method according to any possible implementation in the first aspect.

For technical effects brought by any possible implementation of the second aspect to the fifth aspect, refer to the technical effects brought by different implementations of the first aspect. Details are not described herein again.

### BRIEF DESCRIPTION OF DRAWINGS

FIG. 1 is a schematic diagram of an instance of a lock screen wallpaper in a wallpaper display method according to an embodiment of this application;
FIG. 2A and FIG. 2B are schematic diagrams of an instance of a scenario of a wallpaper display method according to an embodiment of this application;
FIG. 3 is a schematic diagram of an instance of a scenario of a wallpaper display method according to an embodiment of this application;
FIG. 4 is a schematic diagram of a hardware structure of an electronic device according to an embodiment of this application;
FIG. 5A, FIG. 5B, and FIG. 5C are schematic diagrams of a setting manner of a lock screen wallpaper in a wallpaper display method according to an embodiment of this application;
FIG. 6 is a schematic diagram of an instance of a scenario of a wallpaper display method according to an embodiment of this application;
FIG. 7A, FIG. 7B, and FIG. 7C are schematic diagrams of a setting manner of a home screen wallpaper in a wallpaper display method according to an embodiment of this application;
FIG. 8A is a schematic diagram of an implementation of a wallpaper display method according to an embodiment of this application;
FIG. 8B(1) and FIG. 8B(2) are schematic diagrams of an implementation of a wallpaper display method according to an embodiment of this application;
FIG. 9 is a schematic diagram of an implementation of a wallpaper display method according to an embodiment of this application;
FIG. 10A and FIG. 10B are schematic diagrams of an implementation of a wallpaper display method according to an embodiment of this application;
FIG. 11 is a schematic diagram of an implementation of a wallpaper display method according to an embodiment of this application;
FIG. 12 is a schematic diagram of an implementation of a wallpaper display method according to an embodiment of this application;
FIG. 13A is a schematic diagram of an implementation of a wallpaper display method according to an embodiment of this application;
FIG. 13B is a schematic diagram of an implementation of a wallpaper display method according to an embodiment of this application;
FIG. 14A and FIG. 14B are schematic diagrams of an edition manner of a lock screen wallpaper in a wallpaper display method according to an embodiment of this application;
FIG. 15A and FIG. 15B are schematic diagrams of an edition manner of a lock screen wallpaper in a wallpaper display method according to an embodiment of this application;
FIG. 16A, FIG. 16B, and FIG. 16C are schematic diagrams of an edition manner of a lock screen wallpaper in a wallpaper display method according to an embodiment of this application;
FIG. 17 is a schematic diagram of an edition manner of a lock screen wallpaper in a wallpaper display method according to an embodiment of this application;
FIG. 18A and FIG. 18B are schematic diagrams of an edition manner of a lock screen wallpaper in a wallpaper display method according to an embodiment of this application;
FIG. 19A and FIG. 19B are schematic diagrams of an edition manner of a lock screen wallpaper in a wallpaper display method according to an embodiment of this application;
FIG. 20A(1) and FIG. 20A(2) are schematic diagrams of an edition manner of a lock screen wallpaper in a wallpaper display method according to an embodiment of this application;
FIG. 20B(1) and FIG. 20B(2) are schematic diagrams of an edition manner of a lock screen wallpaper in a wallpaper display method according to an embodiment of this application;
FIG. 21A, FIG. 21B, and FIG. 21C are schematic diagrams of an edition manner of a lock screen wallpaper in a wallpaper display method according to an embodiment of this application;
FIG. 22A and FIG. 22B are schematic diagrams of an edition manner of a lock screen wallpaper in a wallpaper display method according to an embodiment of this application;
FIG. 23A, FIG. 23B, and FIG. 23C are schematic diagrams of an edition manner of a lock screen wallpaper in a wallpaper display method according to an embodiment of this application;
FIG. 24A and FIG. 24B are schematic diagrams of an edition manner of a lock screen wallpaper in a wallpaper display method according to an embodiment of this application;
FIG. 25A and FIG. 25B are schematic diagrams of an edition manner of a lock screen wallpaper in a wallpaper display method according to an embodiment of this application;
FIG. 26A and FIG. 26B are schematic diagrams of an edition manner of a lock screen wallpaper in a wallpaper display method according to an embodiment of this application;
FIG. 27A, FIG. 27B, FIG. 27C, and FIG. 27D are schematic diagrams of an edition manner of a lock screen wallpaper in a wallpaper display method according to an embodiment of this application;
FIG. 28A and FIG. 28B are schematic diagrams of an edition manner of a lock screen wallpaper in a wallpaper display method according to an embodiment of this application;
FIG. 29A and FIG. 29B are schematic diagrams of an edition manner of a lock screen wallpaper in a wallpaper display method according to an embodiment of this application; and
FIG. 30 is a schematic diagram of structural composition of an electronic device according to an embodiment of this application.

### DESCRIPTION OF EMBODIMENTS

In descriptions of the embodiments of this application, terms used in the following embodiments are only intended to describe particular embodiments, and are not intended to limit this application. As used in this specification and the appended claims of this application, singular expressions "a", "the", "the foregoing", and "this" are also intended to include an expression such as "one or more", unless otherwise clearly specified in the context. It should be further understood that, in the following embodiments of this application, "at least one" and "one or more" mean one or at least two (including two). The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" usually indicates an "or" relationship between associated objects.

As described in this specification, referring to "one embodiment" or "some embodiments" or the like means that one or more embodiments of this application include particular features, structures, or characteristics described with reference to the embodiments. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners. The term "connection" includes a direct connection and an indirect connection, unless otherwise specified. The terms "first" and "second" are used for descriptive purposes only and should not be construed as indicating or implying relative importance or implicitly indicating a quantity of indicated technical features.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the word such as "example" or "for example" is intended to present related concepts in a specific manner.

Usually, electronic devices such as a mobile phone, a tablet computer, and a smartwatch provide wallpapers. Embodiments of this application provide a wallpaper display method applied to an electronic device, to display a two-dimensional picture as a wallpaper with a three-dimensional display effect through "out-of-frame layout arrangement", thereby providing a user with a three-dimensional and unique wallpaper.

"Out-of-frame layout arrangement" is a layout arrangement manner that breaks a conventional layout arrangement rule. Layout arrangement is performed on a picture and a mask frame with a geometrical shape to implement a visual effect that a part of a main object in the picture extends beyond an edge of the geometrical shape of the mask frame. The main object in the picture may include a character, an animal, a plant, a building, or the like. A wallpaper generated in the "out-of-frame layout arrangement" manner implements a three-dimensional display effect that the main object is "out-of-frame", and is more unique.

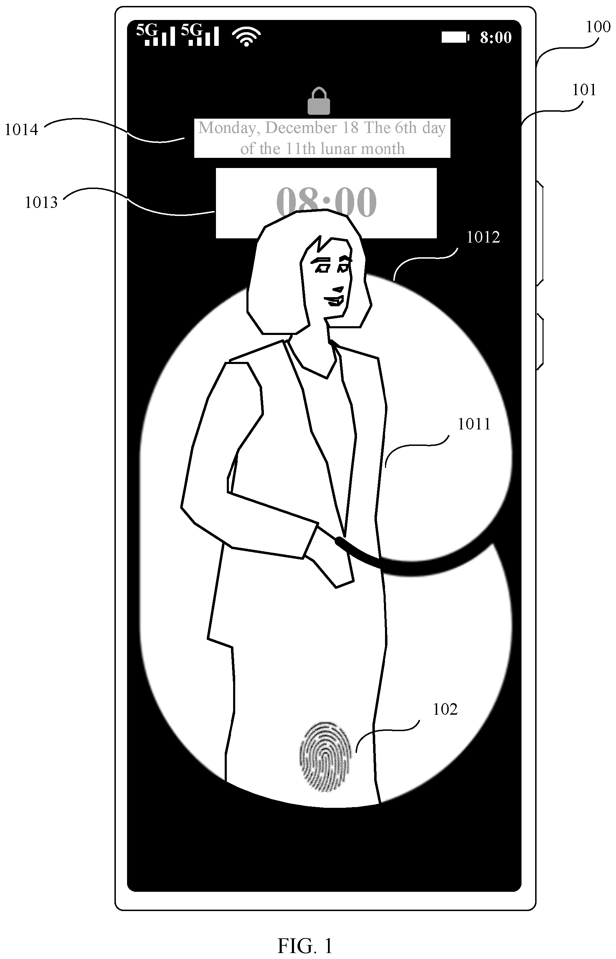

A lock screen wallpaper is used as an example. In a scenario, after a mobile phone is screen-off, the mobile phone displays a lock screen interface in response to a lock operation (for example, a screen-on operation or an operation of pressing a power button) of a user. In a scenario, after a mobile phone is screen-on, the mobile phone displays a lock screen interface in response to a lock operation (for example, tapping a lock screen button) of a user. For example, as shown in FIG. 1, a mobile phone 100 displays a lock screen interface. The lock screen interface includes a lock screen wallpaper 101. A head part of a character 1011 in the lock screen wallpaper 101 extends beyond an edge of a geometrical shape of a mask frame 1012. The head part of the character 1011 visually extends beyond the mask frame 1012, to create a visual effect that the head part of the character is "out-of-frame", thereby implementing a lock screen wallpaper with a three-dimensional display effect. Optionally, the lock screen wallpaper 101 may further include a "clock" icon 1013, a "date" icon 1014, and the like. The "clock" icon 1013 is used to display time, and the "date" icon 1014 is used to display a date. In some examples, the lock screen interface may further include a "fingerprint" icon 102 and the like. The "fingerprint" icon 102 is used to prompt the user to input a fingerprint for fingerprint recognition.

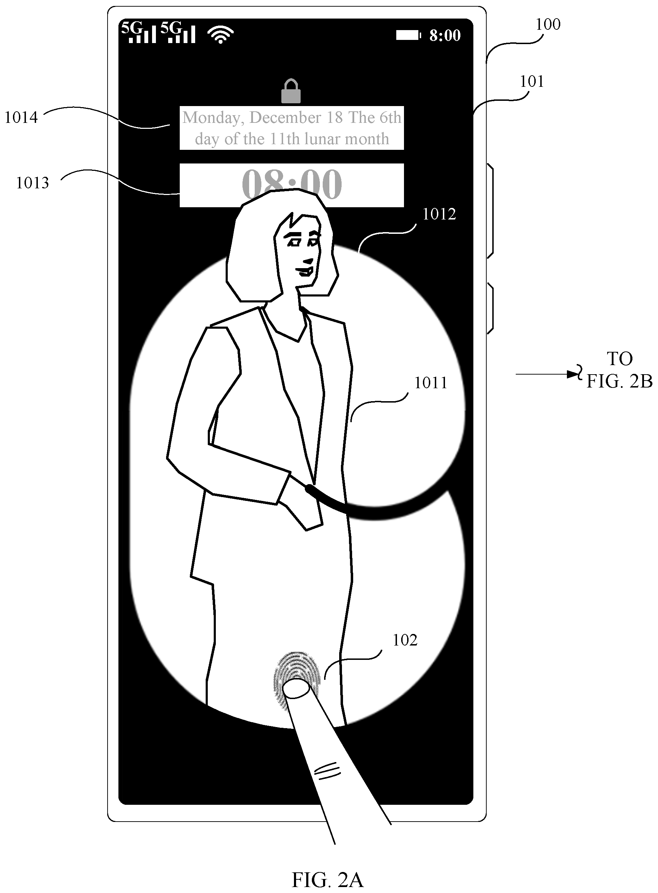

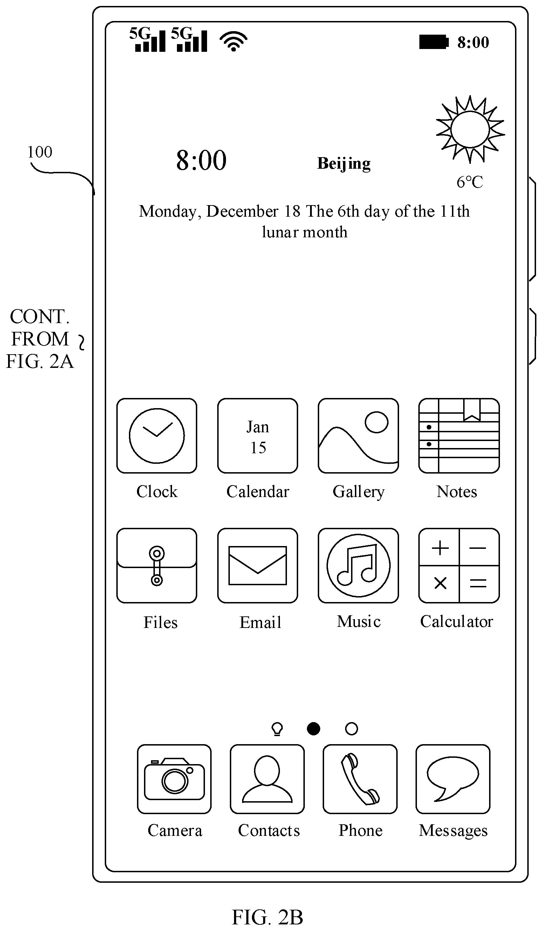

In the lock screen interface, the mobile phone displays a home screen interface in response to an unlock operation of the user. The unlock operation may include inputting a human face, inputting a fingerprint, inputting a lock screen password, or the like. For example, as shown in FIG. 2A and FIG. 2B, the mobile phone 100 receives a fingerprint input operation of the user in the lock screen interface. The mobile phone 100 performs fingerprint recognition based on a collected fingerprint image. If fingerprint recognition succeeds, the mobile phone 100 displays a home screen interface in response to the fingerprint input operation of the user.

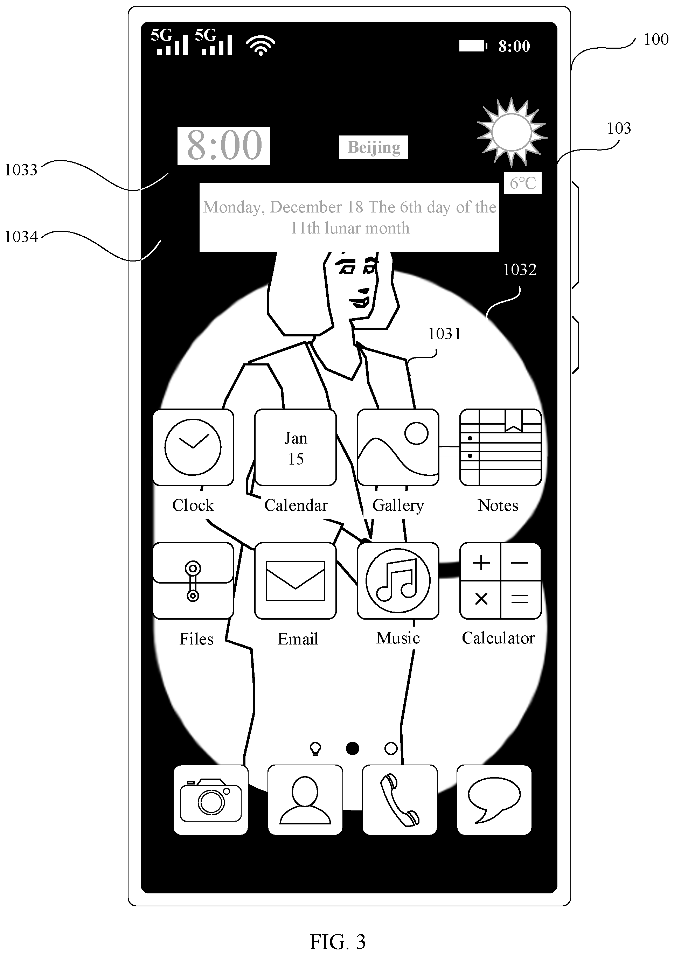

A home screen wallpaper is used as an example. For example, as shown in FIG. 3, the mobile phone 100 displays a home screen interface. The home screen interface displays a home screen wallpaper 103. A head part of a character 1031 in the home screen wallpaper 103 extends beyond an edge of a geometrical shape of a mask frame 1032. The head part of the character 1031 visually extends beyond the mask frame 1032, to create a visual effect that the head part of the character is "out-of-frame", thereby implementing a home screen wallpaper with a three-dimensional display effect. Optionally, the home screen wallpaper 103 may further include a "clock" icon 1033, a "date" icon 1034, and the like. The "clock" icon 1033 is used to display time, and the "date" icon 1034 is used to display a date. In some examples, the home screen interface may further include various application icons, and the application icons are used to start corresponding applications. For example, the mobile phone 100 displays a user interface of a Gallery application in response to a tap operation performed by the user on a "Gallery" icon in the home screen interface.

The wallpaper display method provided in the embodiments of this application may be applied to an electronic device including a display screen. The electronic device may include a mobile phone, a tablet computer, a notebook computer, a personal computer (personal computer, PC), an ultra-mobile personal computer (ultra-mobile personal computer, UMPC), a handheld computer, a netbook, a smart home device (for example, a smart television, a smart screen, a large screen, a smart speaker, or a smart air conditioner), a personal digital assistant (personal digital assistant, PDA), a wearable device (for example, a smart watch or a smart bracelet), an onboard device, a virtual reality device, or the like. This is not limited in this embodiment of this application.

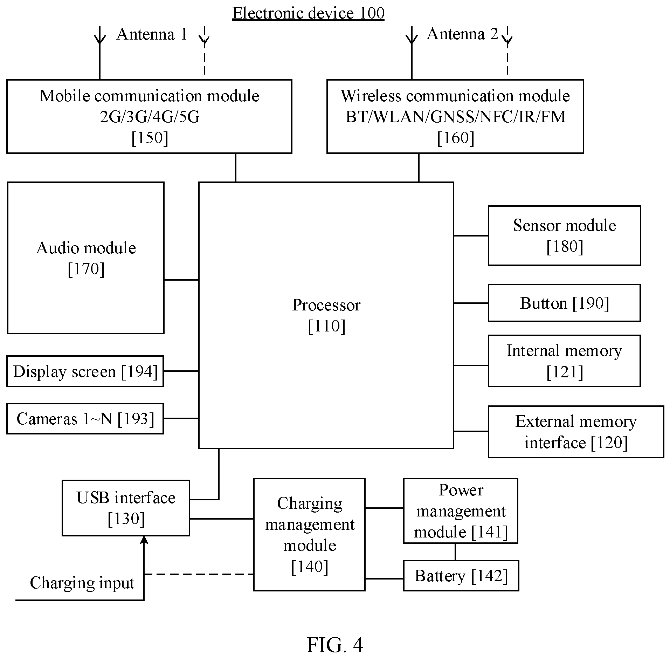

FIG. 4 is a schematic diagram of a structure of an electronic device. An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a camera 191, a display screen 192, and the like. The sensor module 180 may include a pressure sensor, a fingerprint sensor, a temperature sensor, a touch sensor, and the like.

It may be understood that the structure shown in this embodiment does not constitute a specific limitation on the electronic device 100. In some other embodiments, the electronic device 100 may include more or fewer components than those shown in the figure, combine some components, split some components, or have different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data just used or cyclically used by the processor 110. If needing to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in this embodiment is merely an example for description, and does not constitute a limitation on the structure of the electronic device. In some other embodiments, the electronic device may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive wireless charging input by using a wireless charging coil of the electronic device. When charging the battery 142, the charging management module 140 may further supply power to the electronic device through the power management module 141.

The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display screen 192, the camera 191, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display screen 192, the application processor, and the like. The GPU is a microprocessor for image processing, and is connected to the display screen 192 and the application processor. The GPU is configured to perform mathematical and geometric computing for graphics rendering. The processor 110 may include one or more GPUs that execute program instructions to generate or change display information.

The display screen 192 is configured to display an image, a video, and the like. The display screen 192 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flex light-emitting diode (flex light-emitting diode, FLED), a Mini-LED, a Micro-OLED, a Micro-OLED, a quantum dot light-emitting diode (quantum dot light emitting diodes, QLED), or the like.

In this embodiment of this application, the display screen 192 may be configured to display a user interface, for example, a lock screen interface or a home screen interface.

The electronic device 100 may implement a photographing function by using the ISP, the camera 191, the video codec, the GPU, the display screen 192, the application processor, and the like.

The ISP is configured to process data fed back by the camera 191. For example, during photographing, a shutter is opened, and light is transmitted to a camera photosensitive element through a lens. An optical signal is converted into an electrical signal. The camera photosensitive element transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scenario. In some embodiments, the ISP may be disposed in the camera 191.

The camera 191 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include 1 or N cameras 191, where N is a positive integer greater than 1.

The digital signal processor is configured to process a digital signal, and may further process another digital signal in addition to the digital image signal. For example, when the electronic device selects a frequency, the digital signal processor is configured to perform Fourier transform or the like on frequency energy.

The NPU is a neural-network (neural-network, NN) computing processor, which quickly processes input information by referring to a biological neural network structure, for example, by referring to a transmission mode between human brain neurons, and may further perform self-learning continuously. Applications such as intelligent cognition of the electronic device, for example, image recognition, human face recognition, fingerprint recognition, speech recognition, and text understanding, may be implemented by using the NPU.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The external memory interface 120 may be configured to connect to an external memory card, for example, a Micro SD card, to expand a storage capacity of the electronic device. The external memory card communicates with the processor 110 through the external memory interface 120, to implement a data storage function, for example, store a file such as audio or a video in the external memory card.

The internal memory 121 may be configured to store computer-executable program code, and the executable program code includes instructions. The processor 110 runs the instructions stored in the internal memory 121, to perform various function applications and data processing of the electronic device. For example, in this embodiment of this application, the processor 110 may execute instructions stored in the internal memory 121, and the internal memory 121 may include a program storage area and a data storage area. The program storage area may store an operating system and an application required by at least one function. The data storage area may store data and the like created during use of the electronic device. In addition, the internal memory 121 may include a high-speed random access memory, and may further include a nonvolatile memory, for example, at least one magnetic disk storage device, a flash memory device, or a universal flash storage (universal flash storage, UFS).

The pressure sensor is configured to sense a pressure signal, and may convert the pressure signal into an electrical signal. In some embodiments, the pressure sensor may be disposed on the display screen 192. There are many types of pressure sensors, such as a resistive pressure sensor, an inductive pressure sensor, and a capacitive pressure sensor. The capacitive pressure sensor may include at least two parallel plates having a conductive material. When force is exerted on the pressure sensor, capacitance between electrodes changes. The electronic device 100 determines intensity of a pressure based on a change of the capacitance. When a touch operation is performed on the display screen 192, the electronic device 100 detects strength of the touch operation by using the pressure sensor. The electronic device 100 may also calculate a touch location based on a signal detected by the pressure sensor.

The touch sensor is also referred to as a "touch panel". The touch sensor may be disposed in the display screen 192. The touch sensor and the display screen 192 constitute a touchscreen, also referred to as a "touch control screen". The touch sensor is configured to detect a touch operation performed on or near the touch sensor. The touch sensor may transfer the detected touch operation to the application processor to determine a type of a touch event. Visual output related to the touch operation may be provided through the display screen 192.

The button 190 includes a power button, a volume button, or the like. The button 190 may be a mechanical button, or may be a touch button.

In this embodiment of this application, the electronic device may be an electronic device on which an operating system can run and an application can be installed. Optionally, the operating system that runs on the electronic device may be an Android^{®} system, a Windows^{®} system, an iOS^{®} system, or the like.

The following describes, with reference to the accompanying drawings and with an example in which the electronic device is a mobile phone, in detail a wallpaper display method provided in the embodiments of this application. Wallpapers in the embodiments of this application may include a home screen wallpaper, a lock screen wallpaper, an always on display (always on display, AOD) wallpaper, and the like. The following embodiments are described by using the lock screen wallpaper as an example. It should be noted that the wallpaper display method provided in the embodiments of this application is also applicable to another type of wallpaper, for example, the home screen wallpaper, the AOD wallpaper, or the like.

A user may set and edit a wallpaper in a user interface provided by the mobile phone. For example, a mobile phone 100 displays a "Wallpapers" icon in response to a two-finger pinching operation performed by a user in a home screen interface. The user may tap the "Wallpapers" icon to start a wallpaper setting interface. For another example, the mobile phone 100 displays a setting interface in response to a tap operation performed by the user on a "Settings" icon, where the setting interface includes a "Home screen & wallpapers" option. The mobile phone 100 displays a home screen and wallpaper setting interface in response to a tap operation performed by the user on the "Home screen & wallpapers" option, where the home screen and wallpaper setting interface includes a "Wallpapers" option. The mobile phone 100 displays the wallpaper setting interface in response to a tap operation performed by the user on the "Wallpapers" option. The user may set and edit a wallpaper in the wallpaper setting interface.

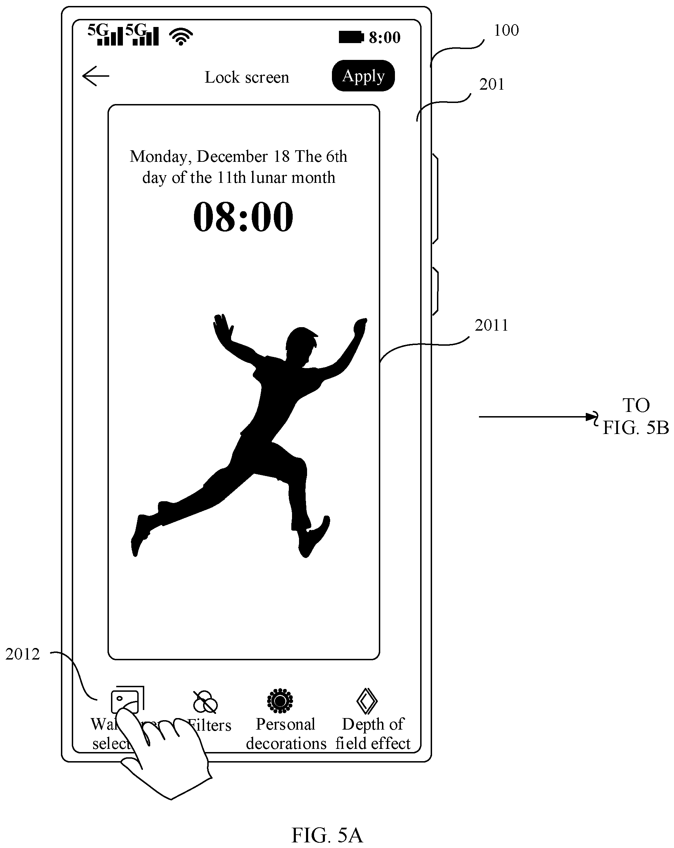

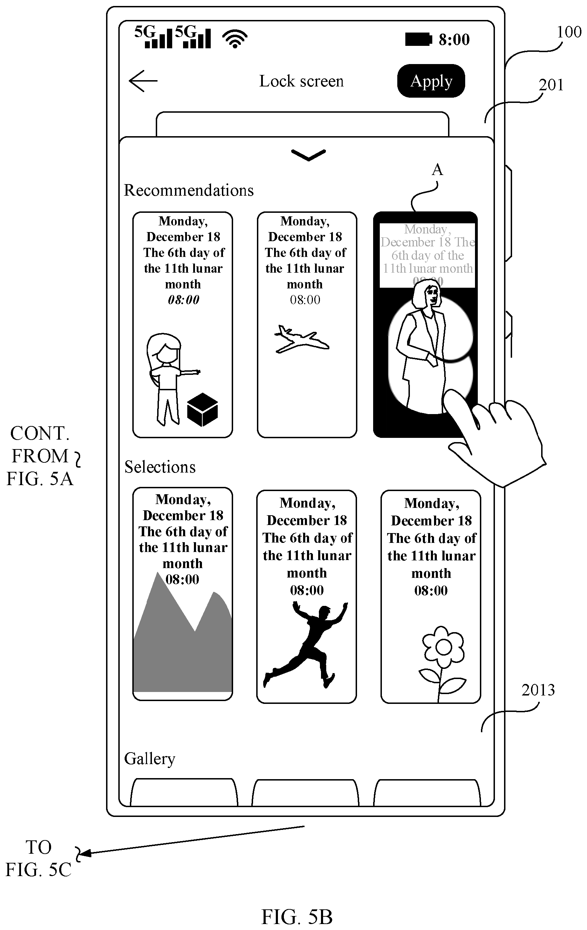

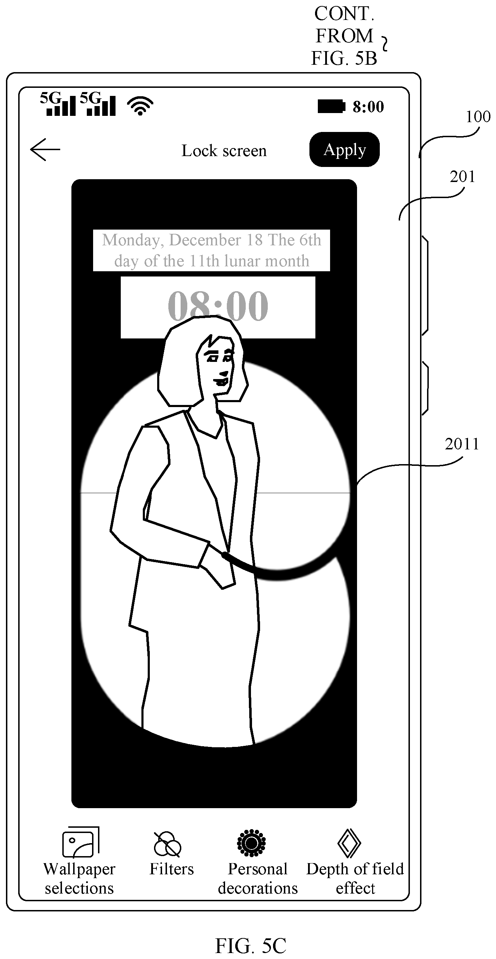

For example, FIG. 5A, FIG. 5B, and FIG. 5C are schematic diagrams of a setting manner of a lock screen wallpaper. As shown in FIG. 5A, the mobile phone 100 displays a lock screen wallpaper setting interface 201. The lock screen wallpaper setting interface 201 includes a preview region 2011. The preview region 2011 is used to display a preview image of a lock screen wallpaper. For example, the lock screen wallpaper setting interface 201 further includes a "Wallpaper selections" icon 2012. The user may tap the "Wallpaper selections" icon 2012 to select a lock screen wallpaper. For example, as shown in FIG. 5B, the mobile phone 100 displays a template page 2013 in the lock screen wallpaper setting interface 201 in response to a tap operation performed by the user on the "Wallpaper selections" icon 2012, where the template page 2013 includes icons of a plurality of lock screen wallpaper templates. The user may select one of the plurality of lock screen wallpaper templates, and set the selected lock screen wallpaper template as a lock screen wallpaper of the mobile phone 100. For example, the template page 2013 includes an icon of a template A, and the user may tap the icon of the template A to select the template A as the lock screen wallpaper. Optionally, an image that is presented by the icon of the template A and that has a display effect that a main object is "out-of-frame" is a default image. Optionally, the image that is presented by the icon of the template A and that has a display effect that a main object is "out-of-frame" is generated by performing layout arrangement on a picture stored in the mobile phone and a mask frame with a default shape. For example, as shown in FIG. 5C, the mobile phone 100 presents the template A in the preview region 2011 as the preview image of the lock screen wallpaper in response to a tap operation performed by the user on the icon of the template A. For example, a preview image of the template A has a three-dimensional display effect that a main object is "out-of-frame".

Optionally, the preview image of the lock screen wallpaper is an image generated based on the template A. Optionally, the preview image of the lock screen wallpaper is an image that is generated by performing layout arrangement on a picture stored in the mobile phone and a mask frame with a default shape and that has a display effect that a main object is "out-of-frame". In a possible example, the image that is presented by the icon of the template A and that has a display effect that a main object is "out-of-frame" is a default image. The preview image of the lock screen wallpaper is an image that is generated by performing layout arrangement on a picture stored in the mobile phone and a mask frame with a default shape and that has a display effect that a main object is "out-of-frame". The preview image of the lock screen wallpaper may be different from the image presented by the icon of the template A.

In an example, the user may set the template A as the lock screen wallpaper of the mobile phone 100. The mobile phone 100 receives an operation that the user determines to set the template A as the lock screen wallpaper, and sets the template A as the lock screen wallpaper of the mobile phone 100. For example, the lock screen wallpaper setting interface 201 includes an "Apply" button. In a user interface shown in FIG. 5C, the mobile phone 100 sets the template A as the lock screen wallpaper in response to a tap operation performed by the user on the "Apply" button.

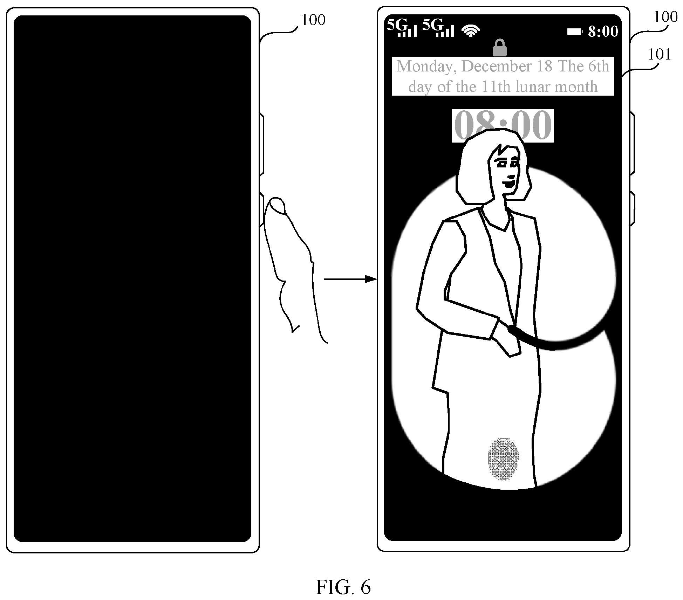

A lock screen wallpaper of a lock screen interface is the template A when the mobile phone 100 displays the lock screen interface. In an example, as shown in FIG. 6, when being screen-off, the mobile phone 100 receives a pressing operation (lock operation) performed by the user on the power button, and the mobile phone 100 displays a lock screen interface in response to the pressing operation performed by the user on the power button. The lock screen interface displays a lock screen wallpaper 101. The lock screen wallpaper 101 is the template A.

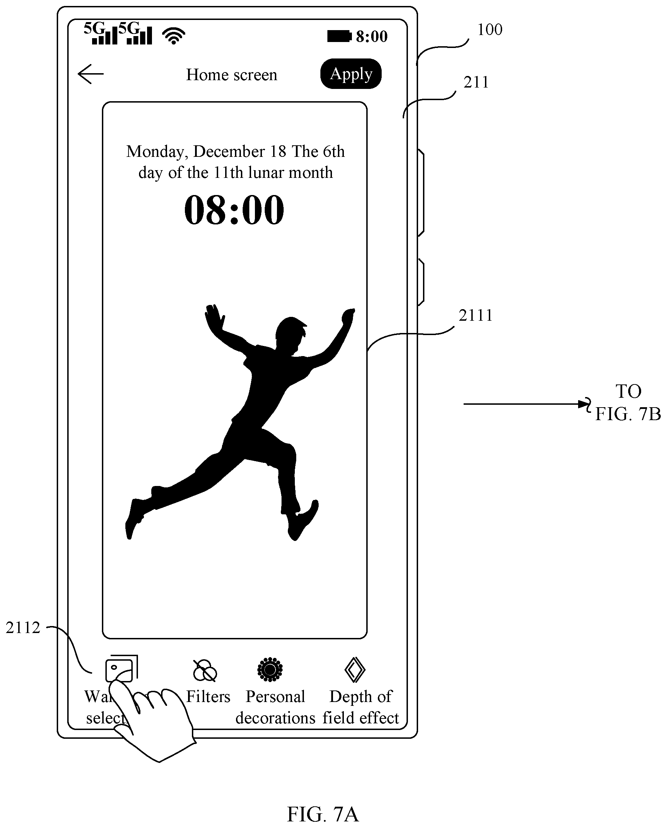

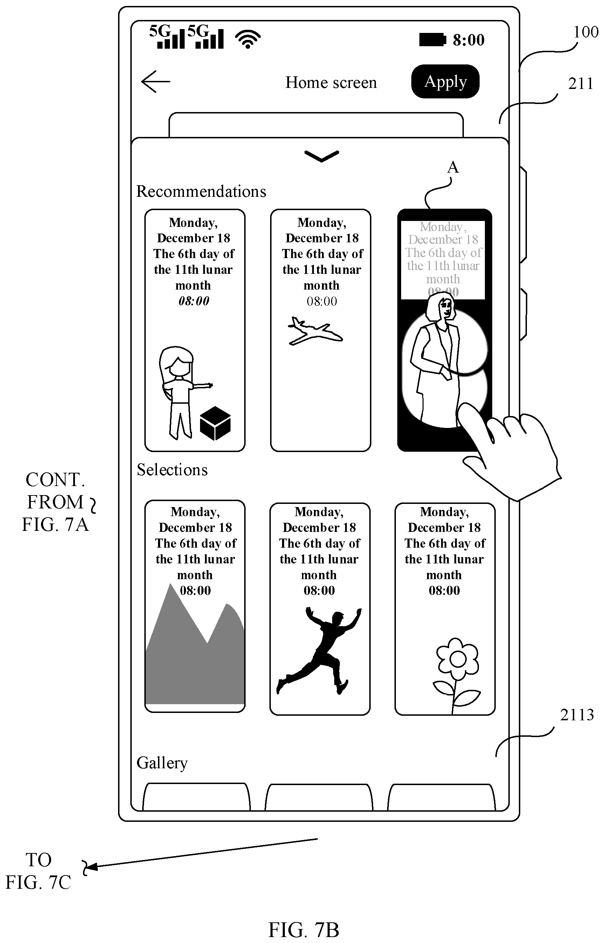

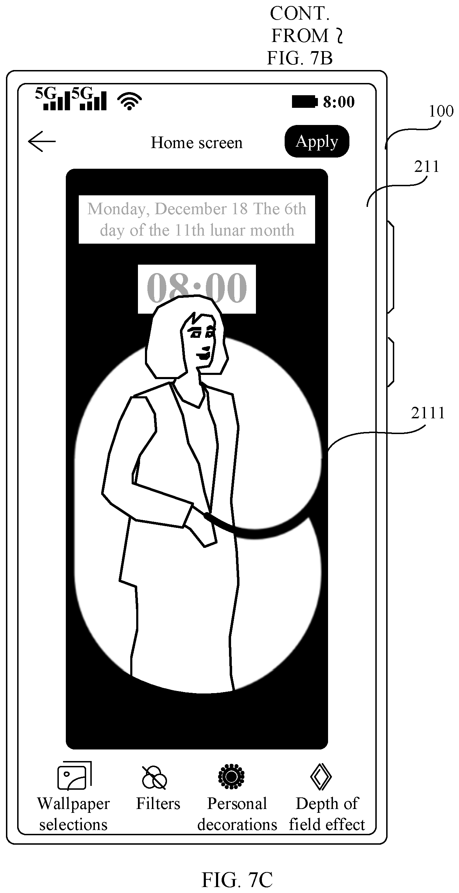

For example, FIG. 7A, FIG. 7B, and FIG. 7C are schematic diagrams of a setting manner of a home screen wallpaper. As shown in FIG. 7A, the mobile phone 100 displays a home screen wallpaper setting interface 211. The home screen wallpaper setting interface 211 includes a preview region 2111. The preview region 2111 is used to display a preview image of a home screen wallpaper. For example, the home screen wallpaper setting interface 201 further includes a "Wallpaper selections" icon 2112. The user may tap the "Wallpaper selections" icon 2112 to select a home screen wallpaper. For example, as shown in FIG. 7B, the mobile phone 100 displays a template page 2113 in the home screen wallpaper setting interface 211 in response to a tap operation performed by the user on the "Wallpaper selections" icon 2112, where the template page 2113 includes icons of a plurality of home screen wallpaper templates. The user may select one of the plurality of home screen wallpaper templates, and set the selected home screen wallpaper template as a home screen wallpaper of the mobile phone 100. For example, the template page 2113 includes an icon of a template A, and the user may tap the icon of the template A to select the template A as the home screen wallpaper. In an example, the user may set the template A as the home screen wallpaper of the mobile phone 100. The mobile phone 100 receives an operation that the user determines to set the template A as the home screen wallpaper, and sets the template A as the home screen wallpaper of the mobile phone 100. For example, the home screen wallpaper setting interface 211 includes an "Apply" button. In a user interface shown in FIG. 7C, the mobile phone 100 sets the template A as the home screen wallpaper in response to a tap operation performed by the user on the "Apply" button.

A home screen wallpaper of a home screen interface is the template A when the mobile phone 100 displays the home screen interface. In an example, the mobile phone 100 receives an operation that the user returns to a home screen, and displays the home screen interface. The home screen interface displays a lock screen wallpaper 101. The lock screen wallpaper 101 is the template A.

The following describes, with the template A as an example, a generation manner of a lock screen wallpaper having an effect that a main object is "out-of-frame" provided in the embodiments of this application.

In the wallpaper display method provided in the embodiments of this application, layout arrangement is performed on a picture and a mask frame with a geometrical shape to implement a visual effect that a part of a main object in the picture extends beyond an edge of the geometrical shape of the mask frame.

For example, the template A is generated by performing layout arrangement on a mask frame a and a main object in a picture b. The template A includes a plurality of layers. The layer may be a transparent canvas of a preset size (for example, a screen size) that is arranged with at least one element (image).

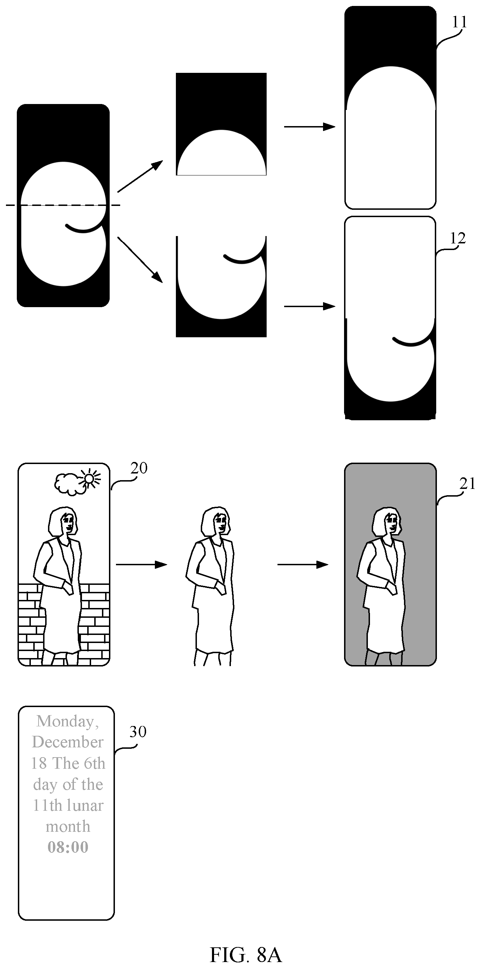

In an implementation, referring to FIG. 8A, the mask frame a with the geometrical shape is divided into an upper half part and a lower half part. The geometrical shape formed by the upper half part and the lower half part of the mask frame a is used to accommodate a main object. In an example, the mask frame a is divided into the upper half part and the lower half part along a horizontal center line. It may be understood that, in a specific implementation, proportions of the upper half part to the lower half part may be adjusted. Specific values of the proportions are not limited in the embodiments of this application.

In an example, the template A includes a layer 11, a layer 12, a layer 20, and a layer 21. An element included in the layer 11 is an image of the upper half part (referred to as an upper half frame) of the mask frame a. An element included in the layer 12 is an image of the lower half part (referred to as a lower half frame) of the mask frame a. An element included in the layer 20 is an image of the picture b. An element included in the layer 21 is a cutout image of the main object that is generated based on the picture b. Optionally, the template A further includes a layer 30, and elements included in the layer 30 are a "clock" icon and a "date" icon.

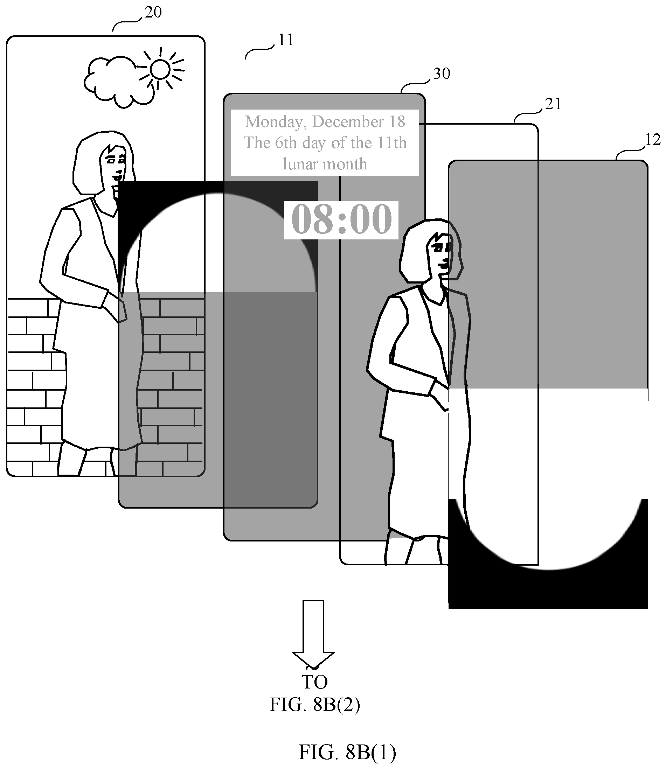

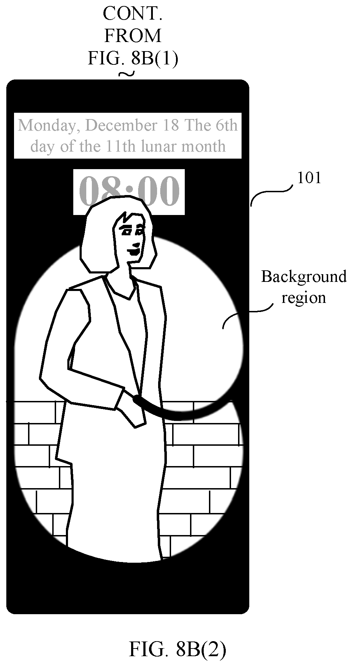

The layer 11, the layer 12, the layer 20, the layer 21, and the layer 30 are composited to generate a lock screen wallpaper. For example, as shown in FIG. 8B(1) and FIG. 8B(2), the layers are sequentially the layer 20, the layer 11, the layer 30, the layer 21, and the layer 12 from bottom to top. These layers are composited into one image to generate a lock screen wallpaper 101. In the lock screen wallpaper 101, the layer 12 is above the layer 21. The element in the layer 12 is the lower half part of the mask frame. The element in the layer 21 is the cutout image of the main object. An overlapping part between the cutout image of the main object and the lower half part of the mask frame is obscured by the mask frame, but a transparent part of the layer 12 does not obscure the main object. The layer 21 is above the layer 11. The element in the layer 11 is the upper half part of the mask frame. An overlapping part between the cutout image of the main object and the upper half part of the mask frame obscures the mask frame. A head part of the main object obscures the upper half frame, to implement an "out-of-frame" display effect that the head part of the main object extends beyond the mask frame.

In this example, the layer 20 includes all images of the picture, such as a background and the main object. A proportion of the main object in the layer 20 is consistent with a proportion of the main object in the layer 21. The background of the picture is displayed in the generated lock screen wallpaper 101. For example, the background behind the main object in the picture b is the ground, and a background of the main object in the lock screen wallpaper 101 is also the background.

In another example, the template A may not include the layer 20. The layers are sequentially the layer 11, the layer 30, the layer 21, and the layer 12 from bottom to top. In this case, a background region in the lock screen wallpaper 101 may be a preset pattern. For example, the background behind the main object in the picture b is the ground, and the background of the main object in the lock screen wallpaper 101 is a preset background of a solid color.

In some other examples, the template A may not include the layer 30. The lock screen wallpaper 101 does not include the "clock" icon and the "date" icon.

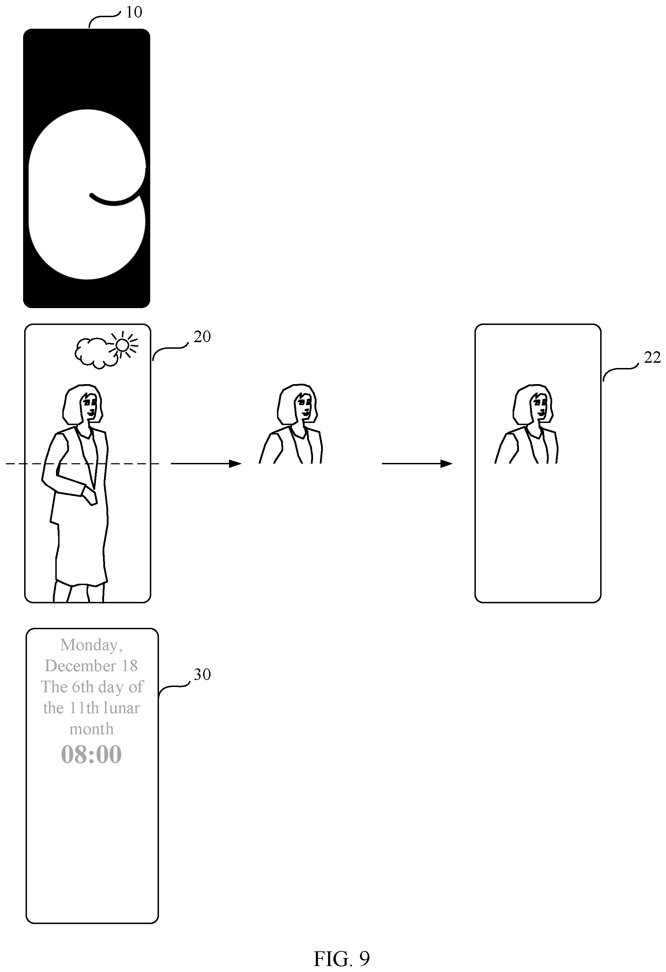

In another implementation, referring to FIG. 9, the picture b is divided into an upper half part and a lower half part. In an example, the picture b is divided into the upper half part and the lower half part along a horizontal center line.

In an example, the template A includes a layer 10, a layer 20, and a layer 22. An element included in the layer 10 is an image of the mask frame a. An element included in the layer 20 is an image of the picture b. An element included in the layer 22 is a cutout image of an upper half part of the main object that is generated based on the upper half part of the picture b.

Optionally, the template A further includes a layer 30, and elements included in the layer 30 are a "clock" icon and a "date" icon.

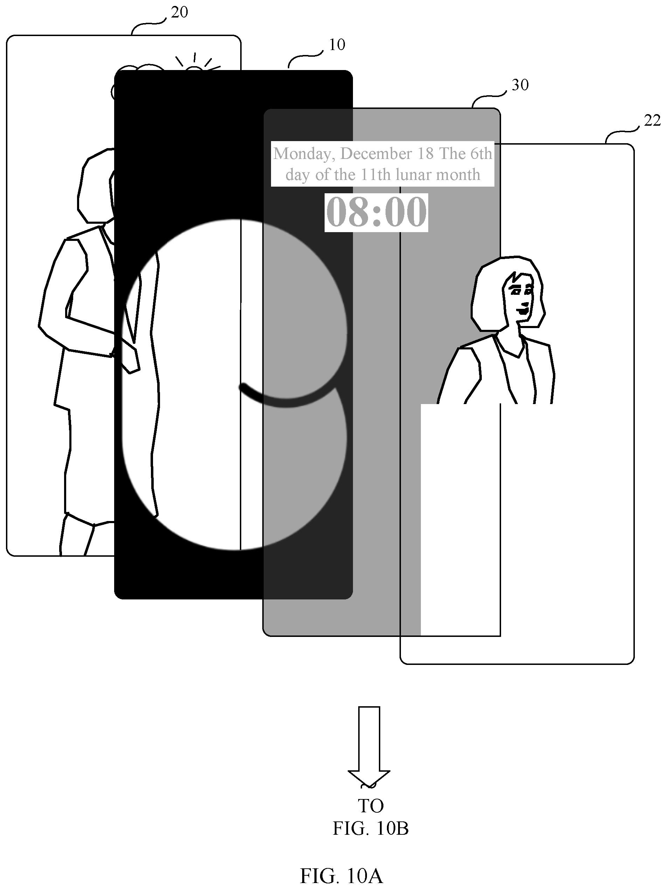

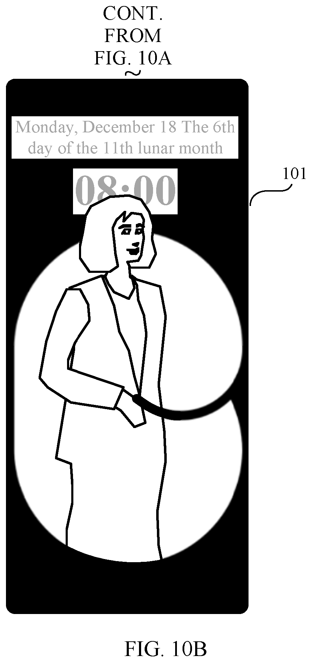

The layer 10, the layer 20, the layer 22, and the layer 30 are composited to generate a lock screen wallpaper. For example, as shown in FIG. 10A and FIG. 10B, the layers are sequentially the layer 20, the layer 10, the layer 30, and the layer 22 from bottom to top. These layers are composited into one image to generate a lock screen wallpaper 101. In the lock screen wallpaper 101, the layer 10 is above the layer 20. The element in the layer 10 is the mask frame. The element in the layer 20 is the image of the picture (including a background and a main object). An overlapping part between the image of the picture and the mask frame is obscured by the mask frame. A transparent part of the layer 10 does not obscure the image of the picture. The layer 22 is above the layer 10, the element in the layer 22 is the cutout image of the upper half part of the main object. An overlapping part between the cutout image of the upper half part of the main object and the mask frame obscures the mask frame. The lower half part of the main object is obscured by the mask frame, and a head part of the main object obscures the mask frame, to implement an "out-of-frame" visual effect that the head part of the main object extends beyond the mask frame.

When the lock screen wallpaper is generated through layout arrangement, composition may be performed based on a location of the main object in the picture relative to the mask frame, so that a highest point of the main object extends beyond the mask frame.

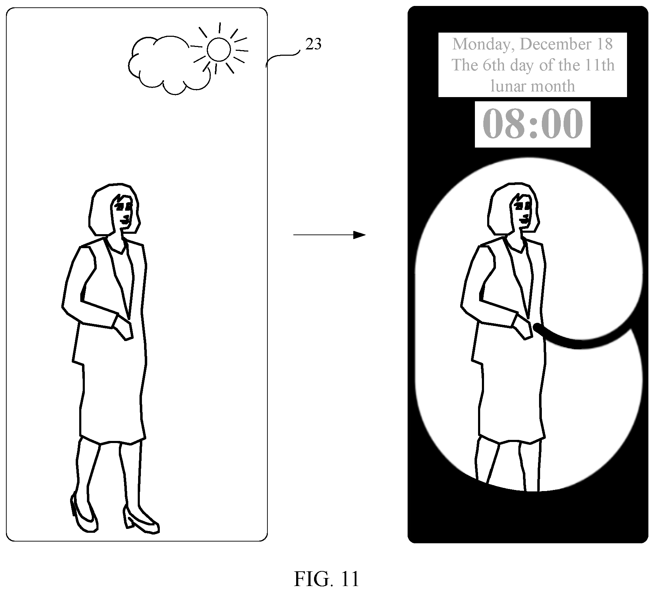

For example, as shown in FIG. 11, a main object in a picture 23 takes up a low proportion in the picture. If the picture and a mask frame are directly composited to generate a lock screen wallpaper, a visual effect that the main object extends beyond the mask frame cannot be displayed.

Before a plurality of layers are composited, an image of the picture or the main object in the picture may be processed first, so that a part of the main object extends beyond an edge of a geometrical shape of the mask frame, to achieve the visual effect that the main object extends beyond the mask frame.

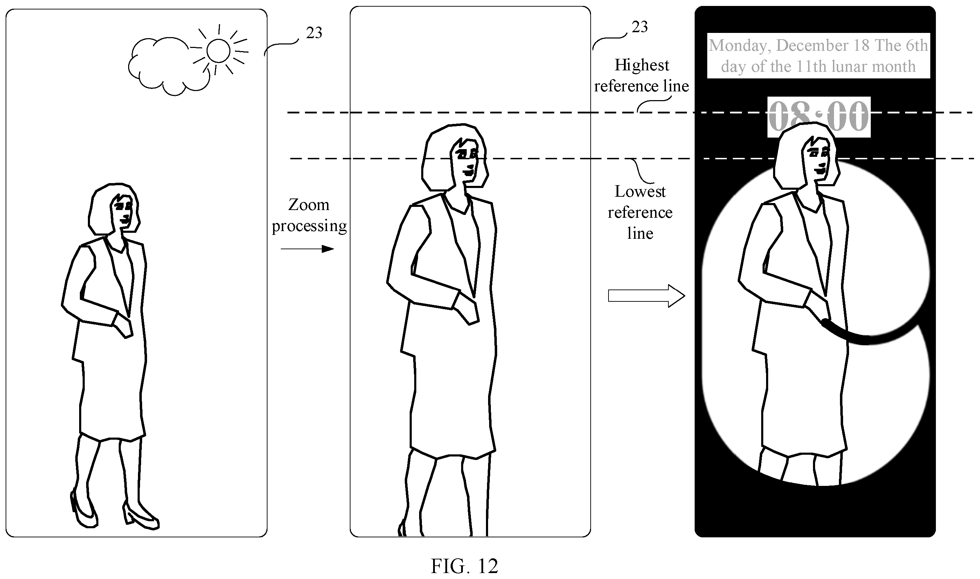

In an example, as shown in FIG. 12, a lowest reference line is set. The lowest reference line is a horizontal line passing through a highest point of the geometrical shape of the mask frame. In an implementation, the picture 23 is zoomed, so that a highest point of the main object in the picture 23 is higher than the lowest reference line. In this way, the highest point of the main object in the lock screen wallpaper extends beyond the edge of the geometrical shape of the mask frame. In another implementation, the picture 23 is moved, for example, the picture 23 is moved upward, downward, leftward, or rightward, so that a highest point of the main object in the picture 23 is higher than the lowest reference line. In this way, the highest point of the main object in the lock screen wallpaper extends beyond the edge of the geometrical shape of the mask frame.

In an example, as shown in FIG. 12, a highest reference line may be further set, for example, the highest reference line is a horizontal center line of a clock. The picture 23 is zoomed or moved, so that the highest point of the main object in the picture 23 is lower than the highest reference line. In this way, the main object in the lock screen wallpaper obscures a small part of the clock.

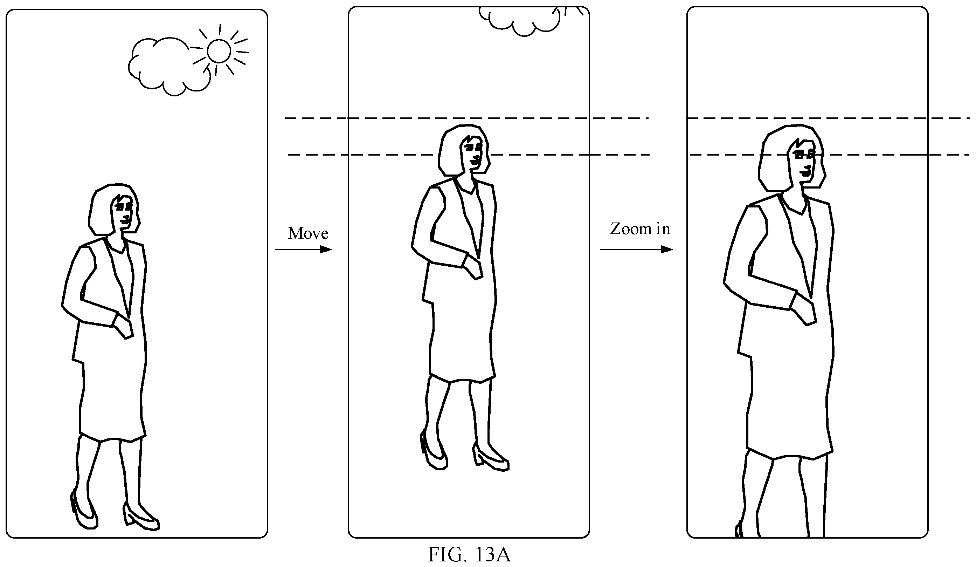

For example, FIG. 13A is a schematic diagram of an implementation of zooming a picture. As shown in FIG. 13A, main object identification is performed on the picture to obtain a location of the main object in the picture. The picture is moved until the highest point of the main object is higher than the lowest reference line and lower than the highest reference line. Then, the picture is zoomed in with the highest point of the main object as a center point, so that a proportion of the main object in a screen display range reaches a preset proportion value. In this way, zoom processing is completed.

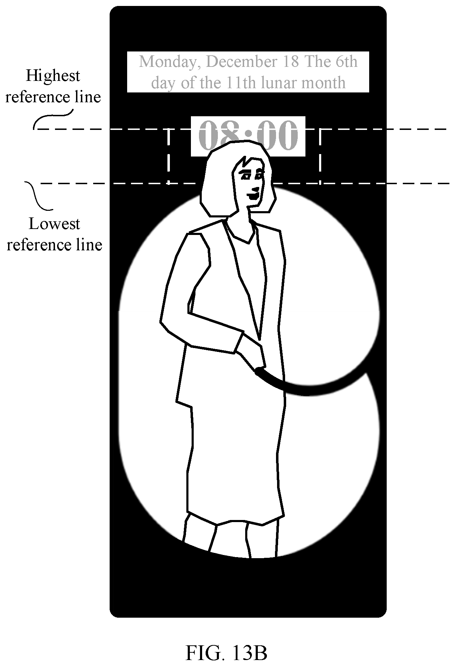

In an implementation, referring to FIG. 13B, a middle region is determined based on the highest reference line, the lowest reference line, a left boundary line of the "clock" icon, and a right boundary line of the "clock" icon. When the plurality of layers are composited, the highest point of the main object is set in the middle region. In this way, the main object may be located at a middle location of an entire lock screen wallpaper image, so that the generated lock screen wallpaper is more beautiful.

The user may edit the lock screen wallpaper in a lock screen wallpaper setting interface.

In some embodiments, the user may zoom (zoom out and zoom in) and move the picture (including the main object) in the lock screen wallpaper in a lock screen wallpaper preview region of the lock screen wallpaper setting interface, to change a size, a location, and the like of the main object on the lock screen wallpaper. For example, the lock screen wallpaper setting interface is the lock screen wallpaper setting interface 201 in FIG. 5A. The lock screen wallpaper preview region is the preview region 2011 in the lock screen wallpaper setting interface 201. The preview image of the lock screen wallpaper generated based on the template A is displayed in the preview region 2011, that is, the preview image of the lock screen wallpaper 101 is displayed. In an example, in the lock screen wallpaper preview region, the main object is zoomed out when a two-finger pinching operation of the user is detected; the main object is zoomed in when a two-finger spreading operation of the user is detected; and the main object is moved when a press-and-drag operation of the user is detected. After the size, the location, and the like of the main object in the picture are changed, the location of the main object relative to the mask frame is also changed.

In an implementation, if it is detected that the highest point of the main object in the picture is higher than the highest reference line (the horizontal center line of the clock), a layer (for example, the layer 30) including the "clock" icon and the "date" icon is located above a layer (for example, the layer 21) including the cutout image of the main object when the preview image is generated, so that the "clock" icon obscures the main object. In this way, the main object can be prevented from excessively obscuring the "clock" icon.

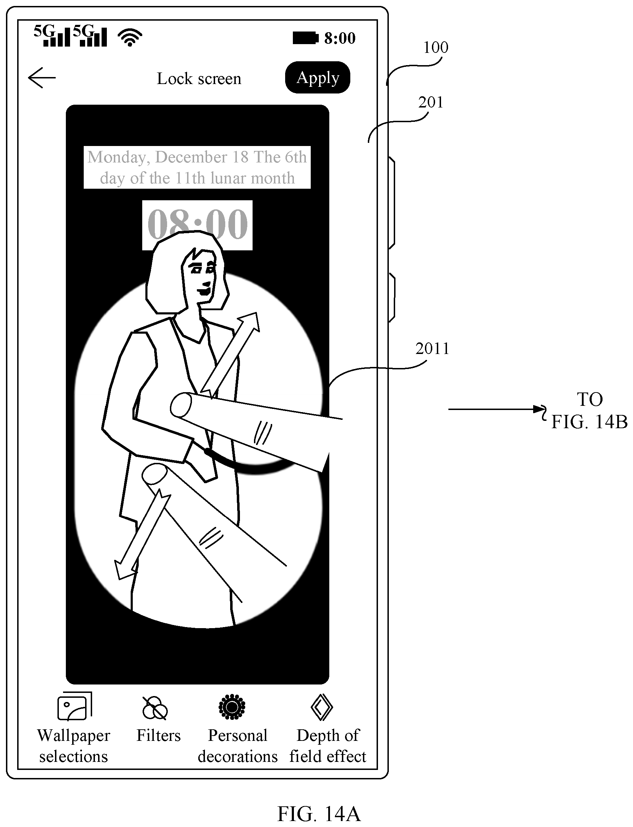

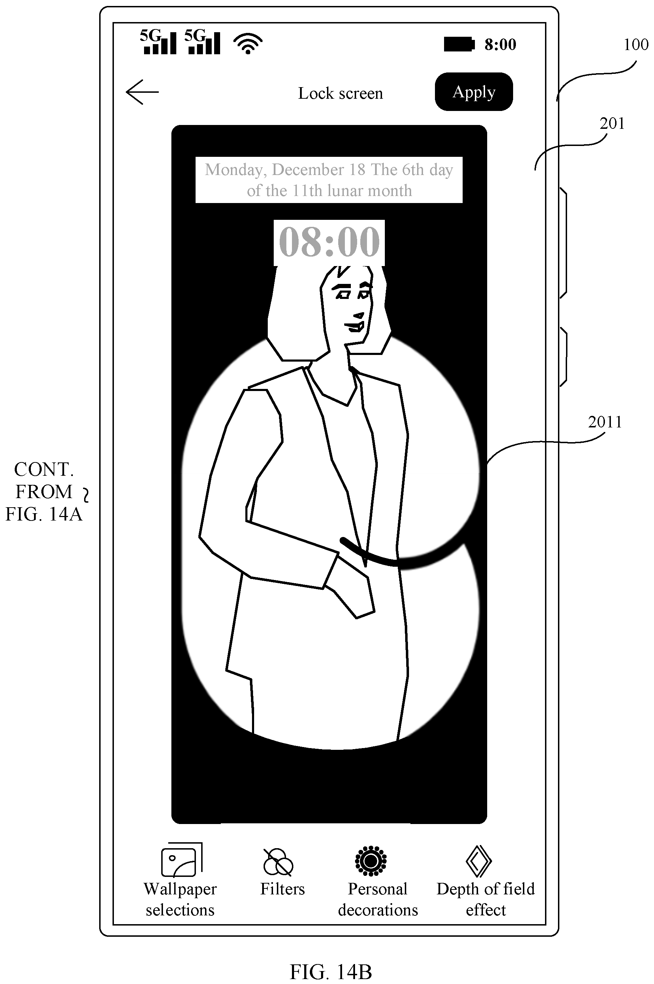

For example, as shown in FIG. 14A, the mobile phone 100 displays a lock screen wallpaper setting interface 201. The lock screen wallpaper setting interface 201 includes a preview region 2011. The template A is presented in the preview region 2011 as a preview image of a lock screen wallpaper (that is, the preview image of the lock screen wallpaper 101). A two-finger spreading operation of the user is received in the preview region 2011. The layer 20 and the layer 21 in the preview image of the lock screen wallpaper 101 are zoomed in based on a same proportion in response to the two-finger spreading operation, that is, an image in the layer 20 and an image in the layer 21 are zoomed in based on a same proportion, to zoom in the main object in the preview image of the lock screen wallpaper 101. As shown in FIG. 14B, when the image of the main object is zoomed in until the highest point of the main object is higher than the highest reference line (the horizontal center line of the clock), a part of the image of the main object is obscured by the "clock" icon. In this case, a layer (for example, the layer 21) in which the cutout image of the main object is located is located below a layer (for example, the layer 30) in which the "clock" icon is located.

In another implementation, if it is detected that the highest point of the main object in the picture is higher than the highest reference line (the horizontal center line of the clock), the "out-of-frame" display effect is canceled. In an example, a layer (for example, the layer 11) in which the upper half part of the mask frame is located is located above a layer (for example, the layer 21) in which the cutout image of the main object is located, and the mask frame obscures the main object, so that the "out-of-frame" display effect is canceled. In another example, a layer (for example, the layer 21) in which the cutout image of the main object is located may be removed, and the mask frame obscures the main object, so that the "out-of-frame" display effect is canceled. In this way, the main object can be prevented from excessively obscuring the "clock" icon and the "date" icon.

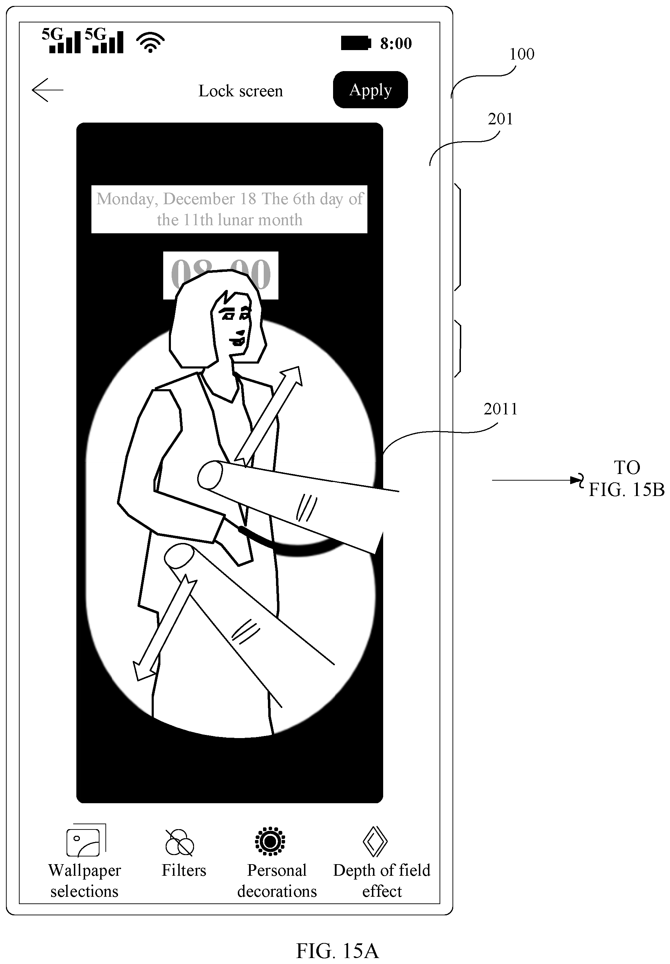

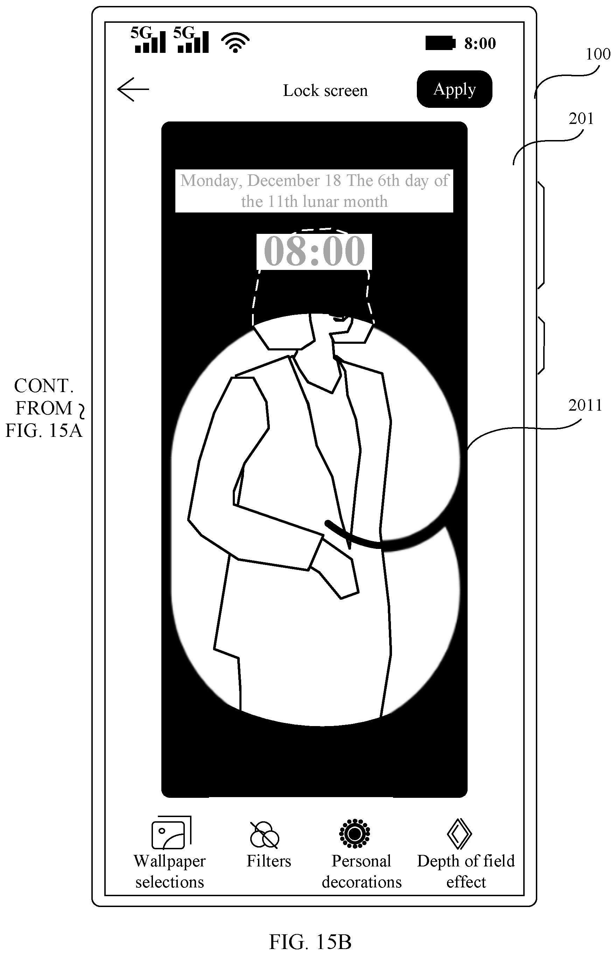

For example, as shown in FIG. 15A, the mobile phone 100 displays a lock screen wallpaper setting interface 201. The lock screen wallpaper setting interface 201 includes a preview region 2011. The template A is presented in the preview region 2011 as a preview image of a lock screen wallpaper (that is, the preview image of the lock screen wallpaper 101). A two-finger spreading operation of the user is received in the preview region 2011. The image of the picture (for example, the image in the layer 20) and the cutout image of the main object (for example, the cutout image of the main object in the layer 21) in the preview image are zoomed in based on a same proportion in response to the two-finger spreading operation. When the image of the main object is zoomed in until the highest point of the main object is higher than the highest reference line (the horizontal center line of the clock), the "out-of-frame" display effect is canceled. As shown in FIG. 15B, the mask frame obscures the main object. In this case, the visual effect that the head part of the main object extends beyond the edge of the geometrical shape of the mask frame is lost.

In an implementation, if it is detected that the main object in the picture is in contact with a preset region on the mask frame, the "out-of-frame" display effect is canceled. In this way, image split can be prevented from occurring at a joint between the upper half part and the lower half part of the main object because the upper half part of the main object is displayed above the mask frame and the lower half part of the main object is displayed below the mask frame.

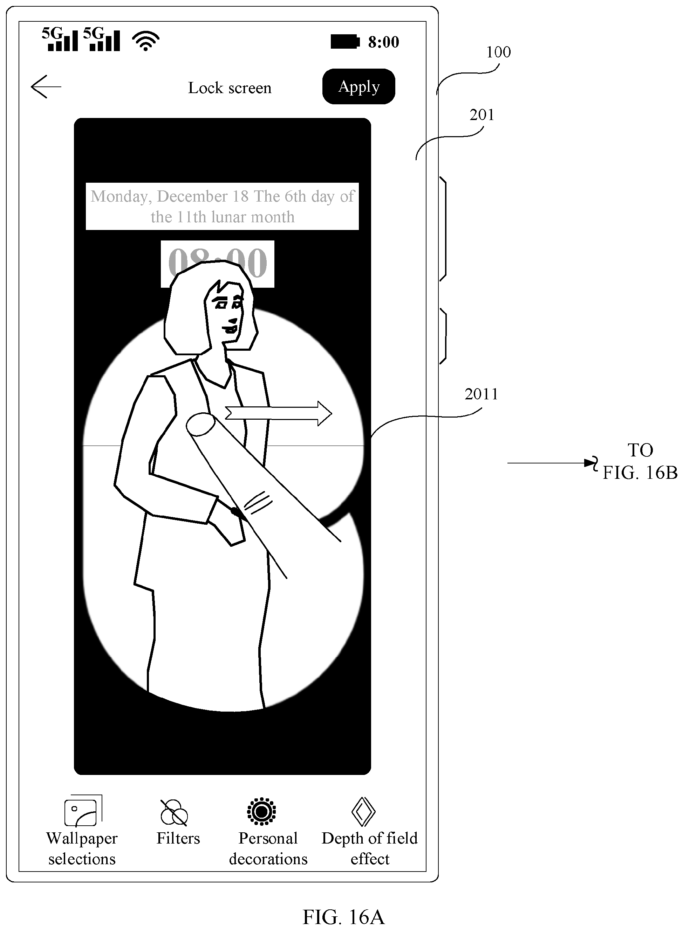

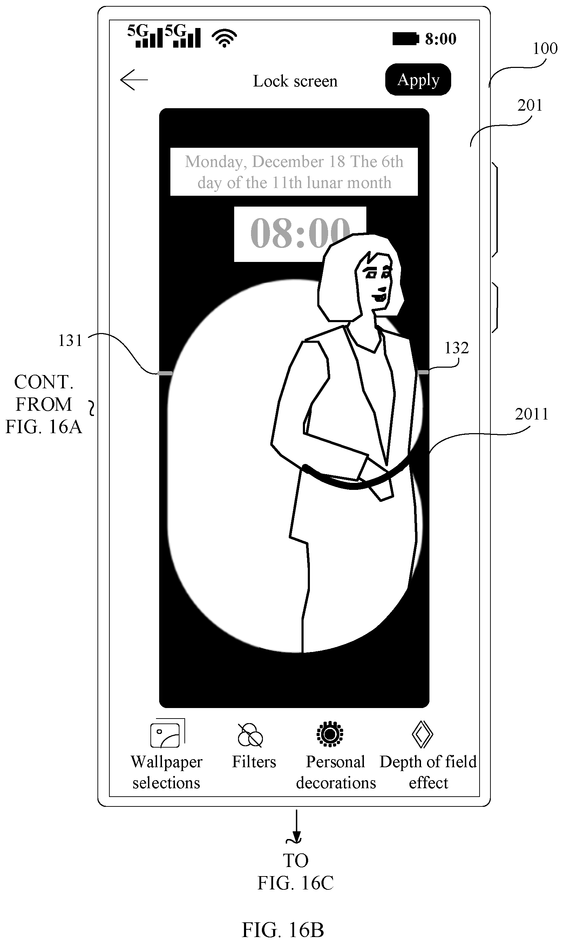

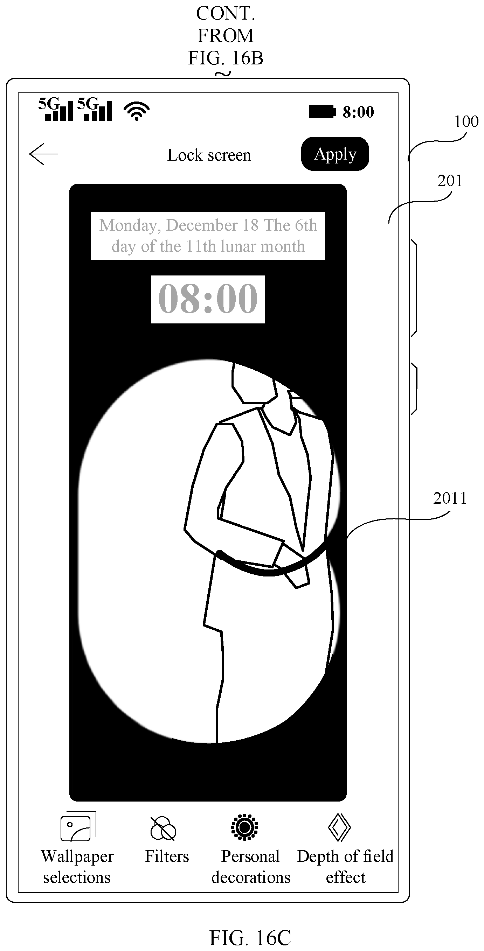

For example, as shown in FIG. 16A, the mobile phone 100 displays a lock screen wallpaper setting interface 201. The lock screen wallpaper setting interface 201 includes a preview region 2011. The template A is presented in the preview region 2011 as a preview image of a lock screen wallpaper (that is, the preview image of the lock screen wallpaper 101). A swipe-right operation of the user is received in the preview region 2011. The image of the picture (for example, the image in the layer 20) and the cutout image of the main object (for example, the cutout image of the main object in the layer 21) in the preview image are moved rightward in response to the swipe-right operation. In an example, the preset region on the mask frame of the template A is a line 131 and a line 132. As shown in FIG. 16B, the image of the main object is moved to touch the line 132. As shown in FIG. 16C, the mask frame obscures the main object in response to the image of the main object touching the line 132. In this case, the visual effect that the head part of the main object extends beyond the edge of the geometrical shape of the mask frame is lost, that is, the "out-of-frame" display effect is canceled. It should be noted that, the line 131 and the line 132 that are displayed in FIG. 16B are merely used to describe a location of the preset region more clearly. In an actual implementation, the preset region (the line 131 and the line 132) on the mask frame is not displayed.

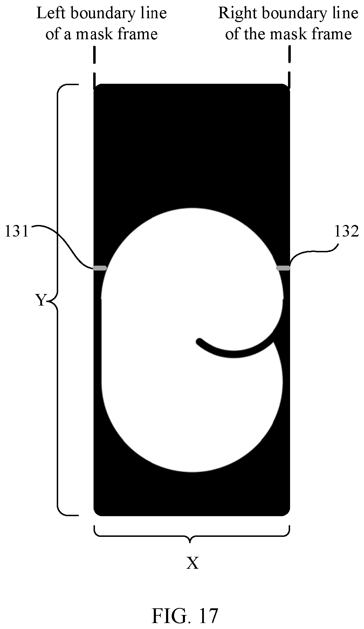

In an example, the preset region on the mask frame is two preset line segments. Each line segment may be represented by start point coordinates and end point coordinates of the line segment. A specific location of the preset line segment may be set based on an actual situation of a wallpaper display region and a model. In an implementation, referring to FIG. 17, vertical coordinate values of the line 131 and the line 132 are X/Y, where X is a width value of a wallpaper display region in the display screen of the mobile phone 100, and Y is a height value of the wallpaper display region in the display screen of the mobile phone 100. Horizontal coordinates of the start points and the end points of the line 131 and the line 132 are determined based on the geometrical shape of the mask frame. That is, after a horizontal line is determined based on a value of X/Y, intersection points between the horizontal line and the geometrical shape of the mask frame are the start points and the end points of the lines.

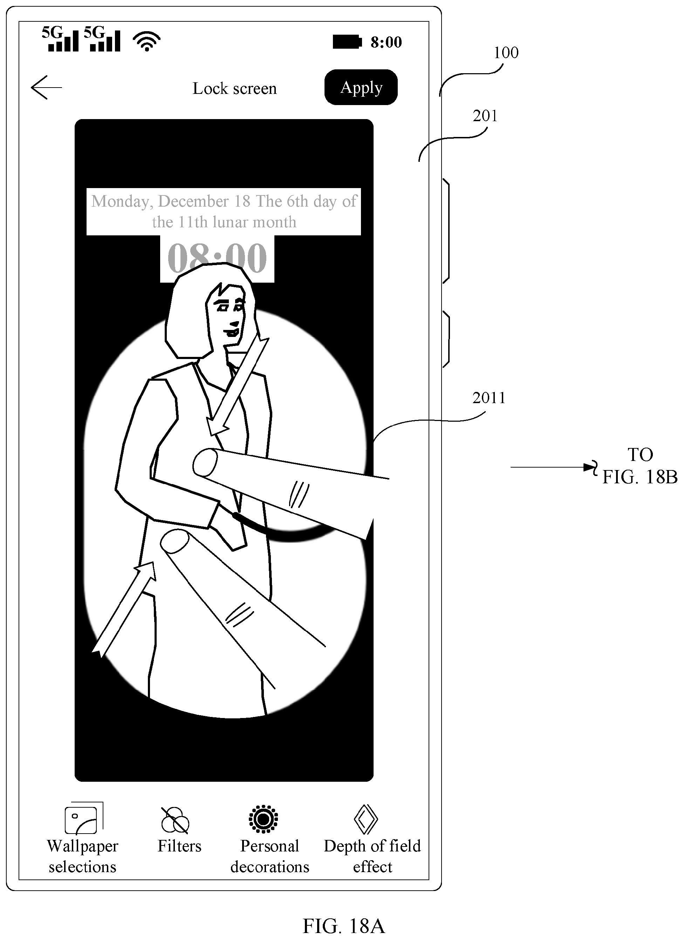

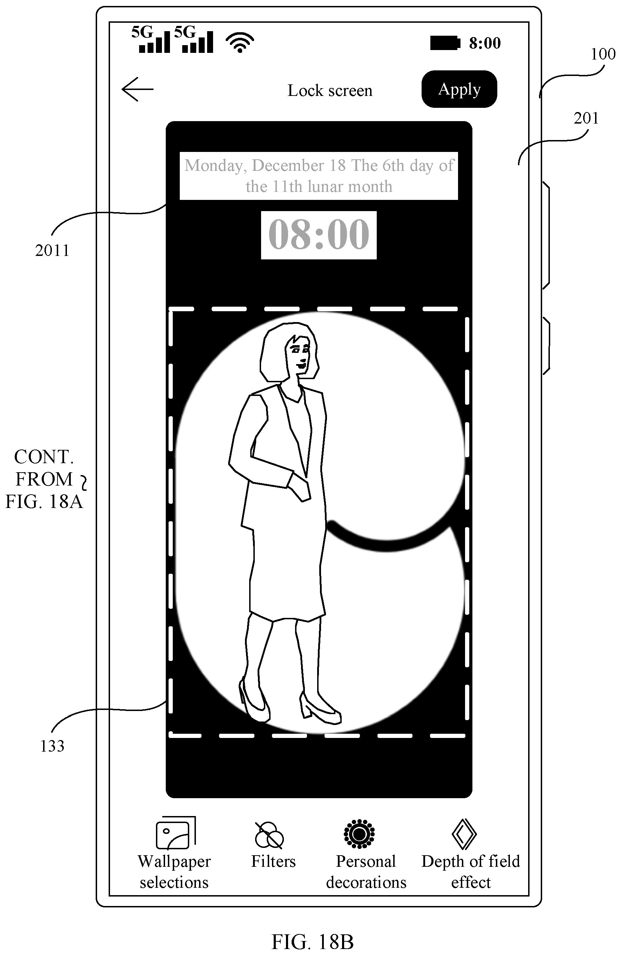

In an implementation, if a two-finger pinching operation of the user is detected, the image of the picture (for example, the image in the layer 20) and the cutout image of the main object (for example, the cutout image of the main object in the layer 21) are zoomed out. A minimum size to which the picture is zoomed out is that an edge of the picture is externally in contact with a preset rectangular frame. In this way, it can be ensured that a background image in the picture fully fills a transparent region other than the geometrical shape of the mask frame, so that the lock screen wallpaper is more beautiful. In an example, a vertex location of a top left corner of the preset rectangular frame is an intersection point between a horizontal line passing through a highest point of an upper edge of the geometrical shape of the mask frame and a vertical line passing through a leftmost point of a left edge of the geometrical shape of the mask frame; and a vertex location of a bottom right corner of the preset rectangular frame is an intersection point between a horizontal line passing through a lowest point of a lower edge of the geometrical shape of the mask frame and a vertical line passing through a rightmost point of a right edge of the geometrical shape of the mask frame. After an edge of any side of the picture is externally in contact with the preset rectangular frame, the mobile phone does not respond to a received picture zoom-out operation (for example, a two-finger pinching operation) of the user. For example, as shown in FIG. 18A, the mobile phone 100 displays a lock screen wallpaper setting interface 201. The lock screen wallpaper setting interface 201 includes a preview region 2011. The template A is presented in the preview region 2011 as a preview image of a lock screen wallpaper (that is, the preview image of the lock screen wallpaper 101). A two-finger pinching operation of the user is received in the preview region 2011, and the image of the picture (including the image of the main object) in the preview image is zoomed out in response to the two-finger pinching operation. As shown in FIG. 18B, after the picture is zoomed out until any edge (for example, a lower edge of the picture) is externally in contact with a preset rectangular frame 133, the image of the picture (including the image of the main object) cannot be continuously zoomed out. If a two-finger pinching operation of the user is received in an interface shown in FIG. 18B, the mobile phone 100 does not zoom out the picture in response to the two-finger pinching operation.

In some embodiments, the user may edit a lock screen wallpaper template with an "out-of-frame" display effect.

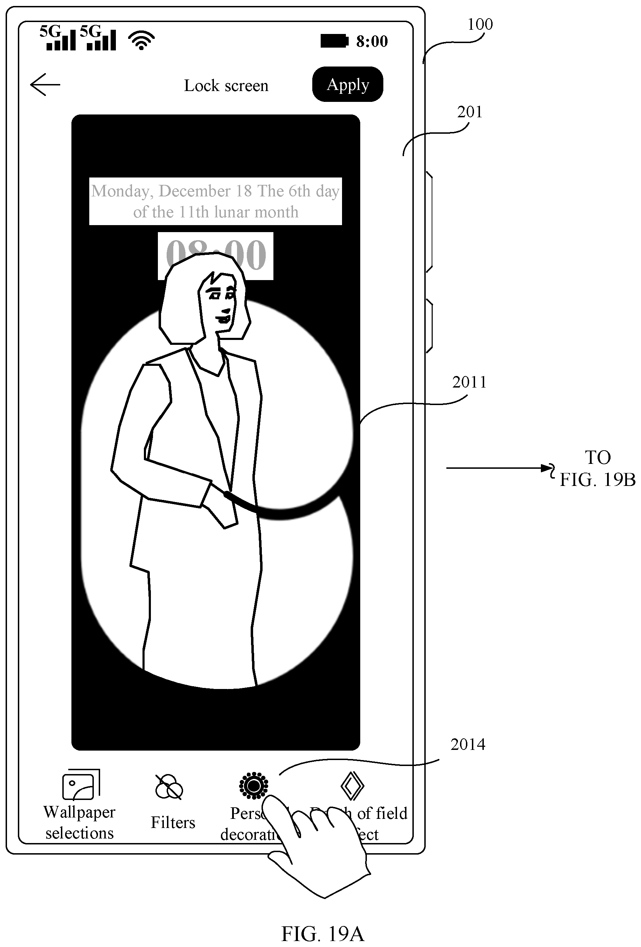

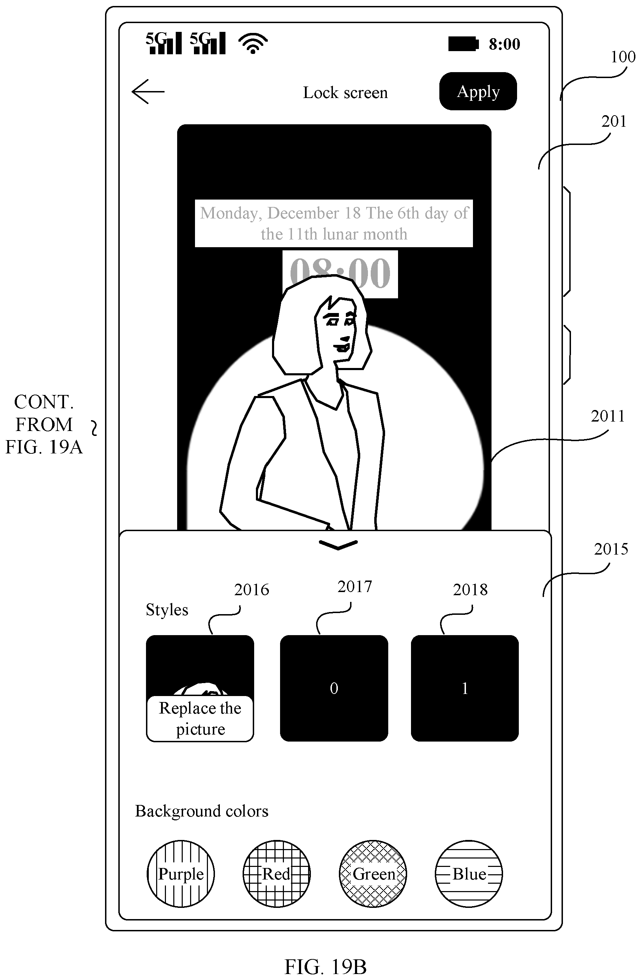

For example, as shown in FIG. 19A, the mobile phone 100 displays a lock screen wallpaper setting interface 201. The lock screen wallpaper setting interface 201 includes a preview region 2011. The template A is presented in the preview region 2011 as a preview image of a lock screen wallpaper (that is, the preview image of the lock screen wallpaper 101). The lock screen wallpaper setting interface 201 further includes a "Personal decorations" icon 2014. As shown in FIG. 19B, the mobile phone 100 displays a template editing page 2015 in the lock screen wallpaper setting interface 201 in response to a tap operation performed by the user on the "Personal decorations" icon 2014. For example, the template editing page 2015 includes a "Replace the picture" icon 2016, a "0" icon 2017, a "1" icon 2018, and the like. The "Replace the picture" icon 2016 is used to replace the picture in the template, the "0" icon 2017 is used to modify the mask frame in the template to a mask frame corresponding to a number "0" (a geometrical shape of the mask frame is a shape of "0"), and the "1" icon 2018 is used to modify the mask frame in the template to a mask frame corresponding to a number "1" (a geometrical shape of the mask frame is a shape of "1").

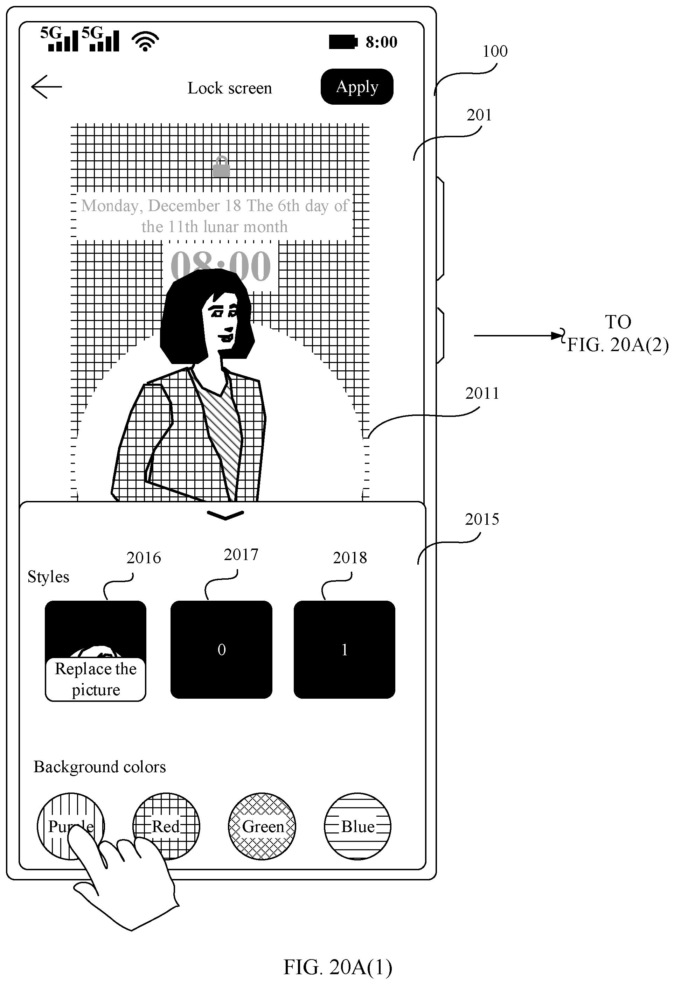

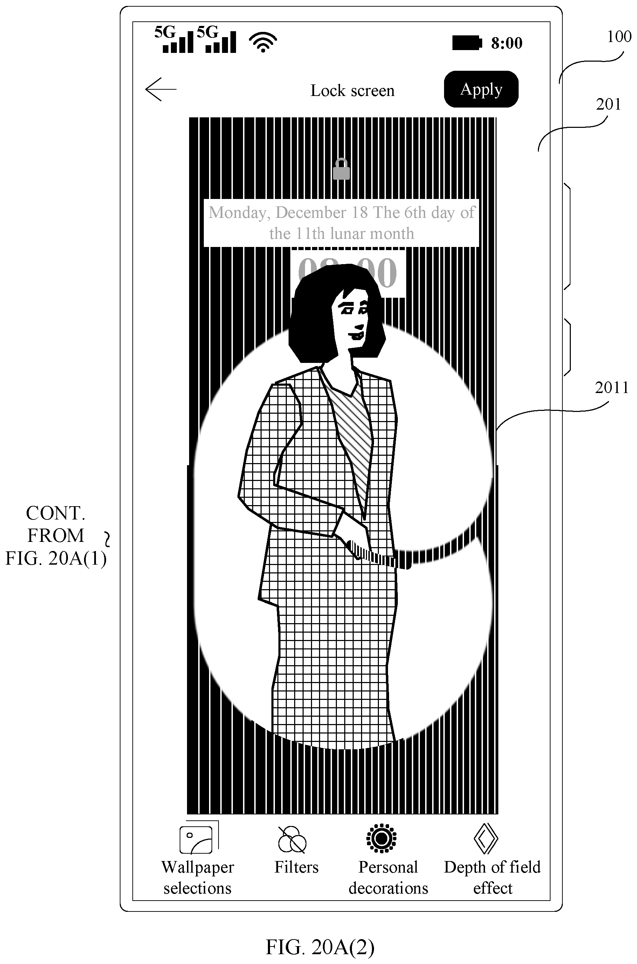

Optionally, the template editing page 2015 further includes background color options, and the background color options are used to change a background color of the mask frame in the template A. For example, the background color of the mask frame in the template A shown in FIG. 19A and FIG. 19B is black. In an example, the background color of the mask frame is set by default based on a main color of the main object in the picture. For example, if a color of clothing of the main object (character) is red, when a layer of the mask frame is generated, the red color of the clothing of the main object (character) is extracted as the background color of the mask frame. When a tap operation performed by the user on a background color option is received, the background color of the mask frame is changed based on a color selected by the user. For example, as shown in FIG. 20A(1) and FIG. 20A(2), the color of the clothing of the main object (character) is mainly red, and the background color of the mask frame is the color (red) of the clothing of the main object (character) by default. The user may change the background color of the mask frame in the template A by tapping the background color option in the template editing page 2015. For example, a color of the mask frame in the template A presented in the preview region 2011 is changed into purple in response to a tap operation performed by the user on a purple option.

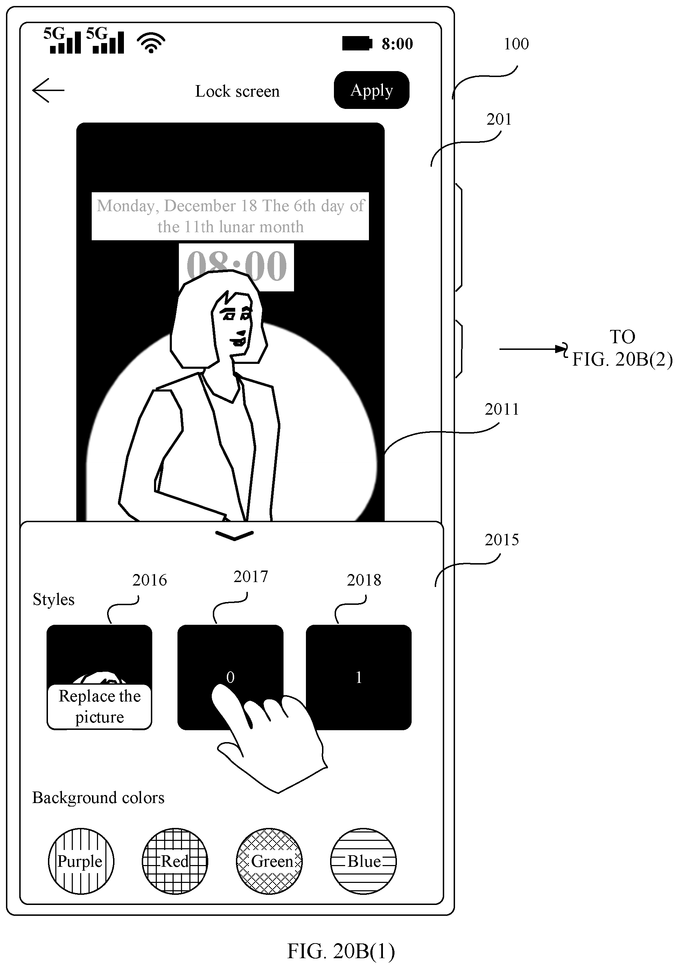

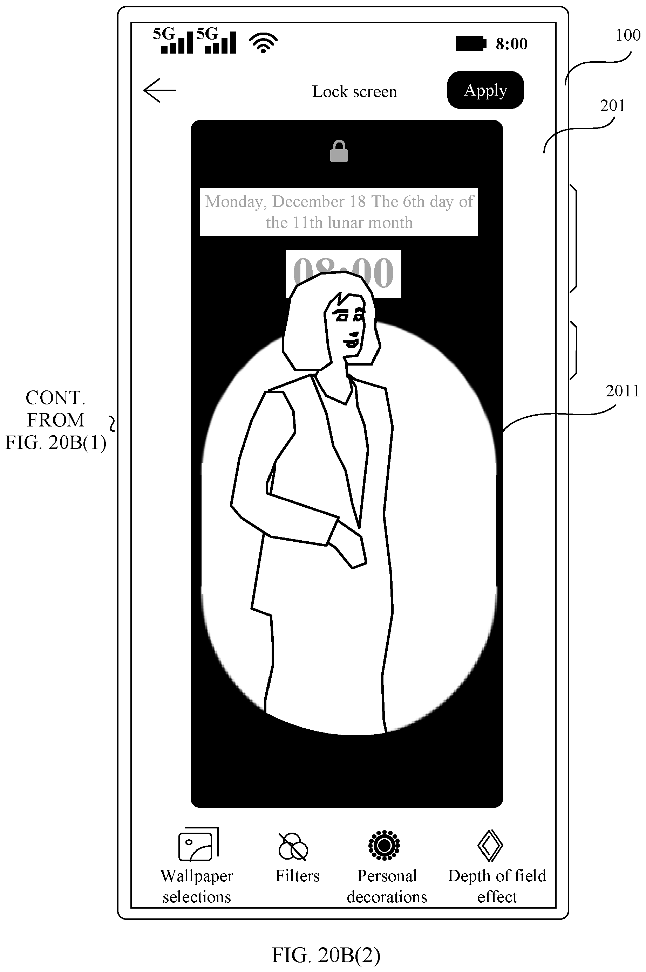

In an example, the mask frame in the template may be replaced. For example, as shown in FIG. 20B(1) and FIG. 20B(2), the mobile phone 100 receives a tap operation performed by the user on the "0" icon 2017, and modifies the mask frame in the template to the mask frame corresponding to the number "0" (the geometrical shape of the mask frame is the shape of "0"). For example, the geometrical shape of the mask frame in the preview image of the template presented in the preview region 2011 is the shape of "0".

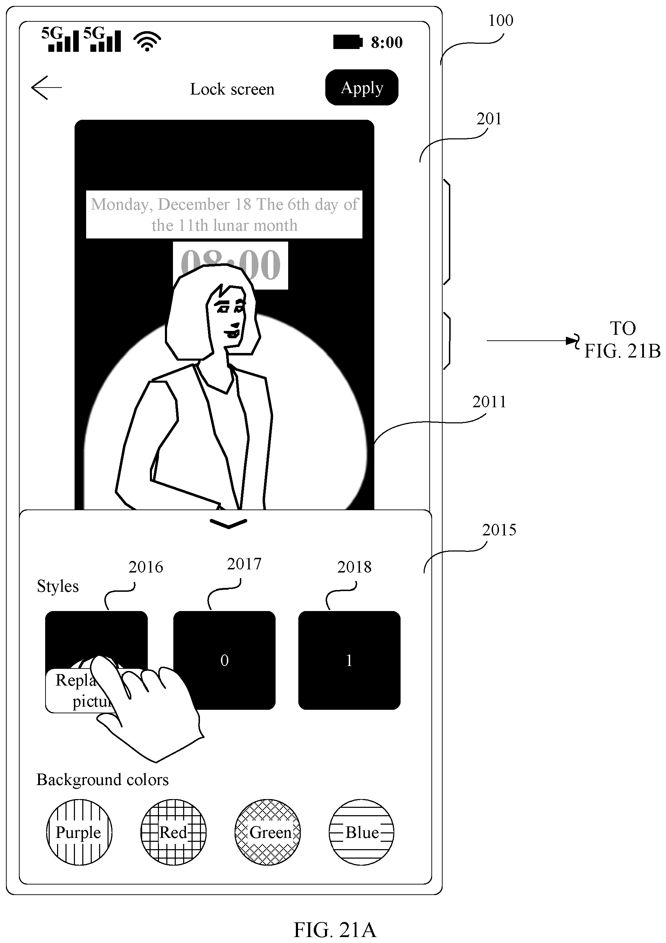

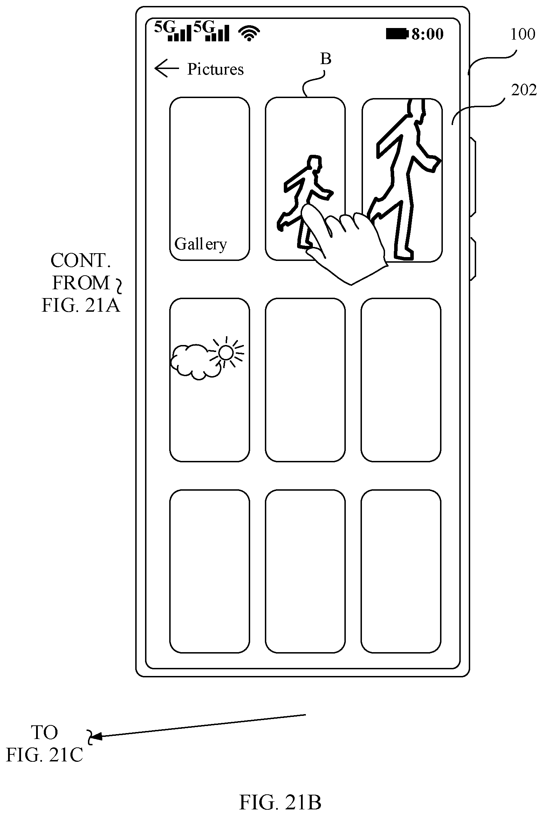

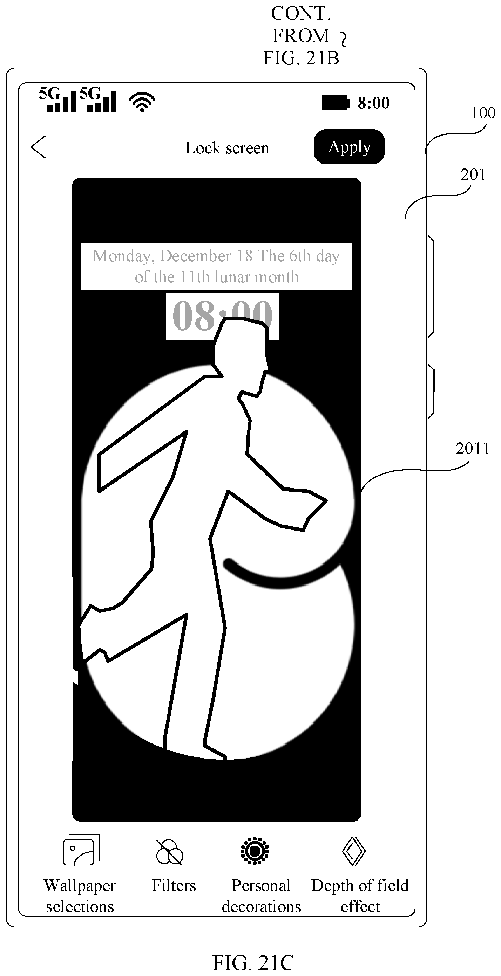

In an example, the picture in the template may be replaced. For example, as shown in FIG. 21A, the mobile phone 100 displays a template editing page 2015 in a lock screen wallpaper setting interface 201, and the template editing page 2015 includes a "Replace the picture" icon 2016. As shown in FIG. 21B, the mobile phone 100 displays a picture interface 202 in response to a tap operation performed by the user on the "Replace the picture" icon 2016. The picture interface 202 includes a plurality of pictures. The user may select one of the pictures as the picture in the template. For example, the picture interface 202 includes a picture B. As shown in FIG. 21C, the mobile phone 100 displays a lock screen wallpaper setting interface 201 in response to a tap operation performed by the user on the picture B. The lock screen wallpaper setting interface 201 includes a preview region 2011. A picture in a preview image of a template displayed in the preview region 2011 is updated to the picture B. In an implementation, the picture B may be zoomed, moved, or the like when a lock screen wallpaper is generated based on the picture B, so that a highest point of a main object in the picture B is higher than the lowest reference line and lower than the highest reference line, thereby implementing the "out-of-frame" display effect and obscuring a small part of the "clock" icon. Optionally, the highest point of the main object in the picture B may be set in the middle region, so that the main object is located at the middle location in the entire lock screen wallpaper image, and the generated lock screen wallpaper is more beautiful. Optionally, it is determined that the main object does not touch the preset region (for example, the preset two line segments) on the mask frame, thereby avoiding image split at a joint between the upper half part and the lower half part of the main object.

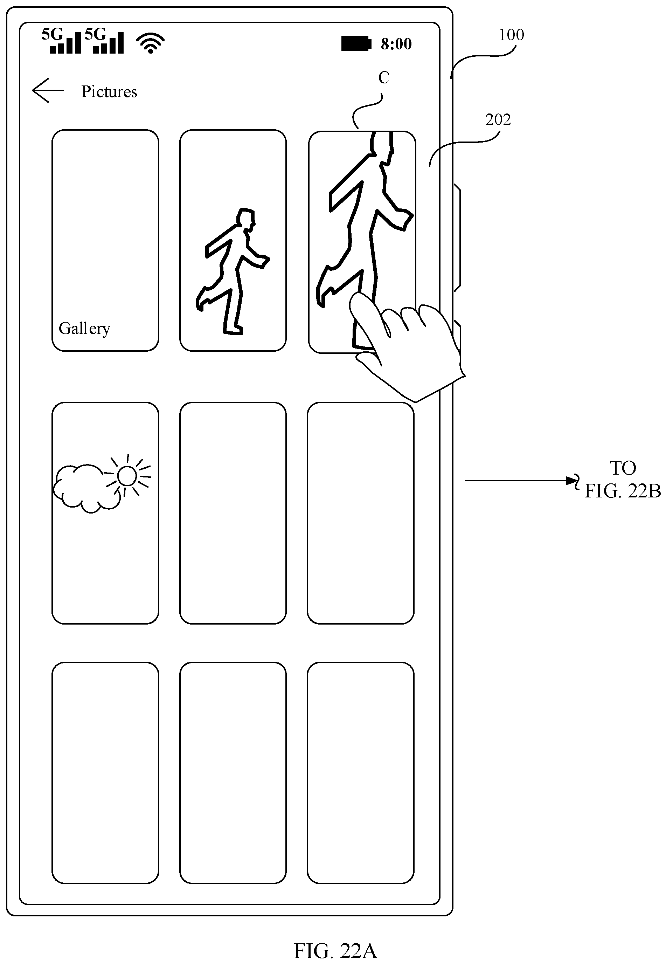

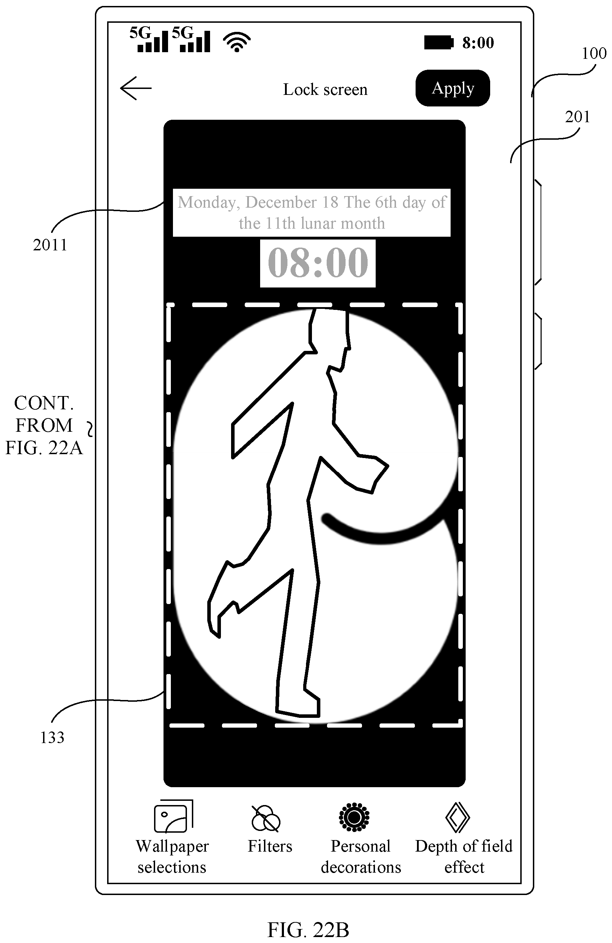

In an implementation, when a distance between the highest point of the main object in the picture and an upper edge of the picture is less than a preset value, if the lock screen wallpaper with the "out-of-frame" display effect is generated based on the picture, the main object obscures large parts of the "clock" icon and the "date" icon, thus affecting time and date check of the user. In an example, when the distance between the highest point of the main object in the picture and the upper edge of the picture is less than the preset value, the lock screen wallpaper with the "out-of-frame" display effect is not generated, for example, the layer in which the mask frame is located is located above the layer in which the main object is located, that is, the mask frame obscures the main object in the picture. To prevent the mask frame from obscuring a large part of the main object, in an example, the picture is zoomed out until the edge of the picture is externally in contact with the preset rectangular frame, that is, the picture is zoomed out to the minimum size to display an image of a more complete main object in the picture. For example, as shown in FIG. 22A and FIG. 22B, a picture interface 202 includes a picture C. The mobile phone 100 displays a lock screen wallpaper setting interface 201 in response to a tap operation performed by the user on the picture C. The lock screen wallpaper setting interface 201 includes a preview region 2011. A picture in a preview image of a template displayed in the preview region 2011 is updated to the picture C. Because a distance between a highest point of a main object in the picture C and an upper edge of the picture is less than the preset value, the picture C in the preview image of the template is obscured by the mask frame, and the picture C is zoomed out until an edge of the picture is externally in contact with a preset rectangular frame 133.

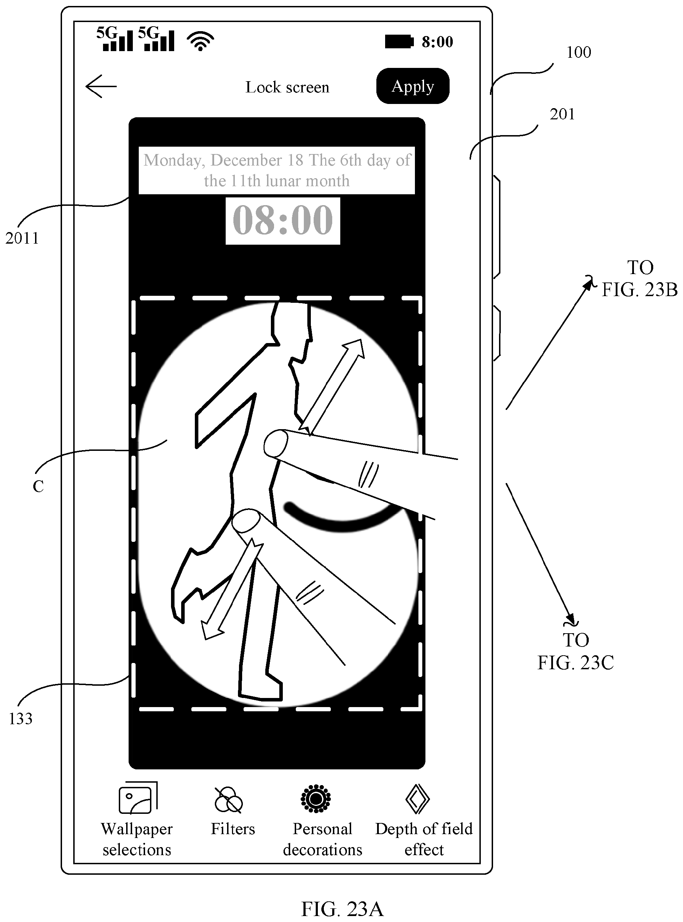

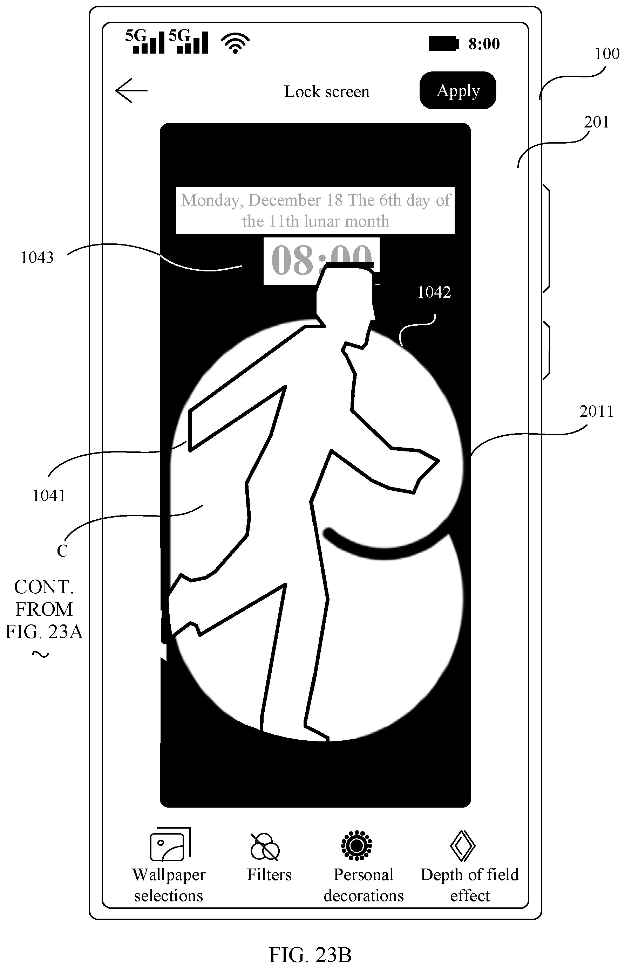

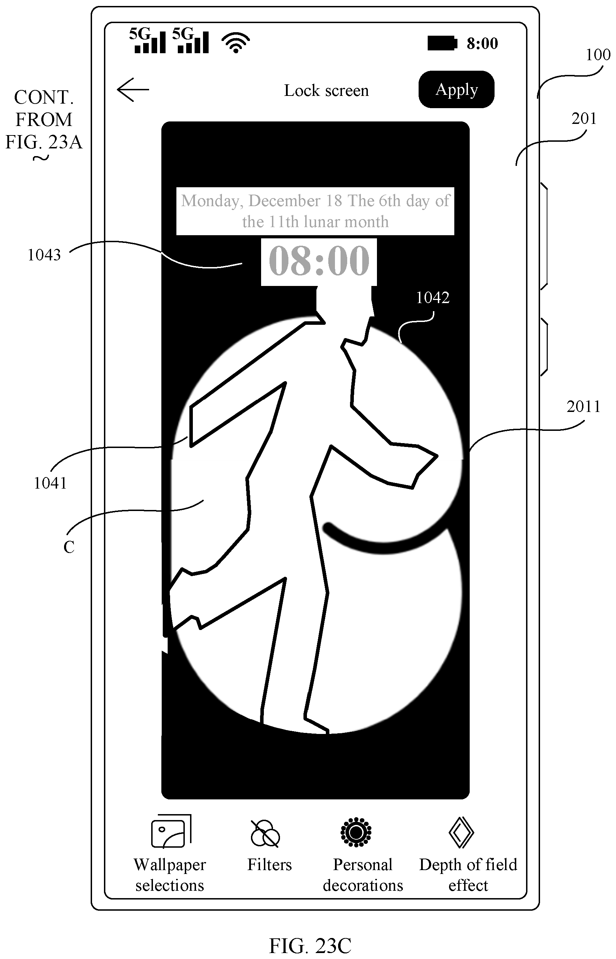

In an implementation, for the template generated based on the picture C (a picture in which a distance between a highest point of a main object and an upper edge of the picture is less than the preset value), the user is supported to zoom in the picture as required. If a picture zoom-in operation of the user is received, the "out-of-frame" display effect is generated, that is, a layer in which the upper half part of the main object is located obscures a layer in which the upper half part of the mask frame is located, and a layer in which the lower half part of the mask frame is located obscures a layer in which the lower half part of the main object is located. That is, for a picture in which a main object in the picture has a specific defect (for example, is not complete), a lock screen wallpaper with the "out-of-frame" display effect may also be generated based on an operation of the user. For example, as shown in FIG. 23A, the mobile phone 100 displays a lock screen wallpaper setting interface 201. The lock screen wallpaper setting interface 201 includes a preview region 2011. A picture in a preview image of a template displayed in the preview region 2011 is the picture C. The picture C is obscured by the mask frame, and the edge of the picture C is externally in contact with a preset rectangular frame 133. As shown in FIG. 23B, the picture C is zoomed in in response to a two-finger spreading operation of the user. In the picture C, a layer in which an upper half part of a character 1041 is located obscures a layer in which an upper half frame of a mask frame 1042 is located, and a head part of the character 1041 in a preview image extends beyond an edge of a geometrical shape of the mask frame 1042. In this way, the head part of the character 1041 visually extends beyond the mask frame 1042, thereby implementing a display effect that the head part of the character is "out-of-frame". In an example, the layer in which the upper half part of the main object is located obscures the layer in which the "clock" icon is located. As shown in FIG. 23B, the head part of the character 1041 obscures a "clock" icon 1043. In another example, the layer in which the "clock" icon is located obscures the layer in which the upper half part of the main object is located. As shown in FIG. 23C, the "clock" icon 1043 obscures the head part of the character 1041.

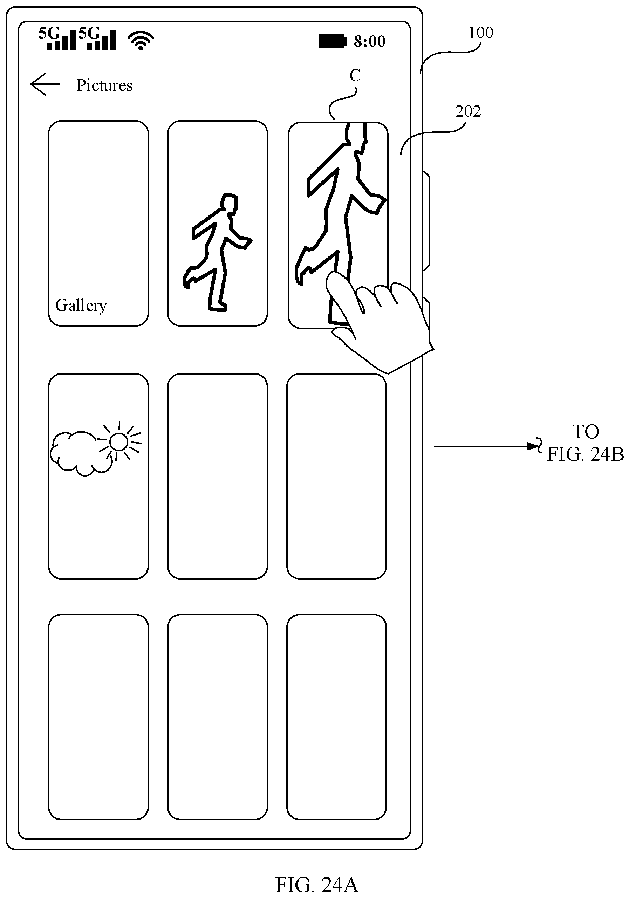

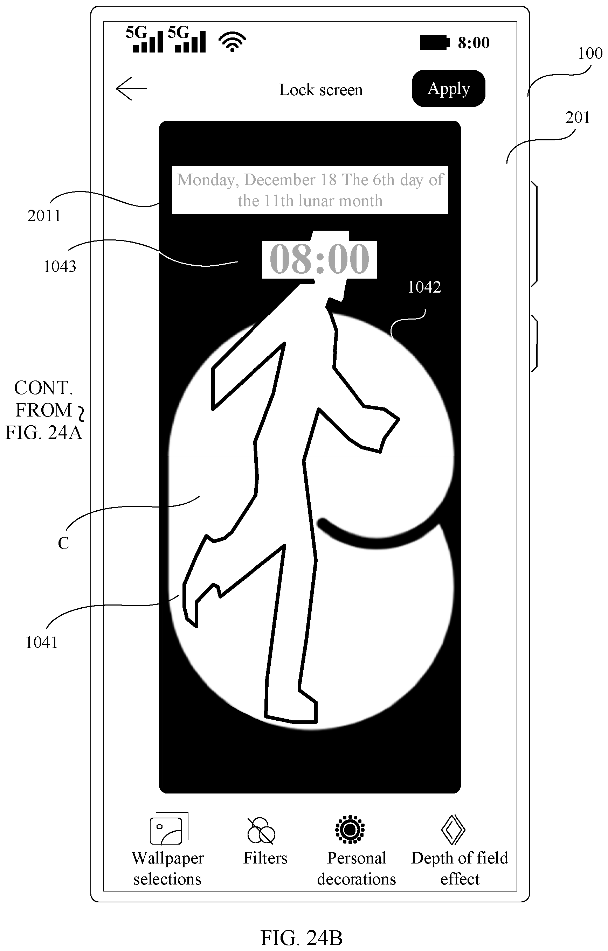

In an implementation, if the distance between the highest point of the main object in the picture and the upper edge of the picture is less than the preset value, the "out-of-frame" display effect is generated, that is, the layer in which the upper half part of the main object is located obscures the layer in which the upper half part of the mask frame is located, and the layer in which the lower half part of the mask frame is located obscures the layer in which the lower half part of the main object is located. In an example, the layer in which the "clock" icon is located obscures the layer in which the upper half part of the main object is located, that is, the main object is hidden under the "clock" icon. For example, as shown in FIG. 24A and FIG. 24B, a picture interface 202 includes a picture C. The mobile phone 100 displays a lock screen wallpaper setting interface 201 in response to a tap operation performed by the user on the picture C. The lock screen wallpaper setting interface 201 includes a preview region 2011. A picture in a preview image of a template displayed in the preview region 2011 is updated to the picture C. In the picture C, a layer in which an upper half part of a character 1041 is located obscures a layer in which an upper half frame of a mask frame 1042 is located, and a head part of the character 1041 in a preview image extends beyond an edge of a geometrical shape of the mask frame 1042. In this way, the head part of the character 1041 visually extends beyond the mask frame 1042, thereby implementing a display effect that the head part of the character is "out-of-frame". Because a distance between a highest point of a main object in the picture C and an upper edge of the picture is less than the preset value, the main object 1041 in the picture C in the preview image is obscured by the "clock" icon.

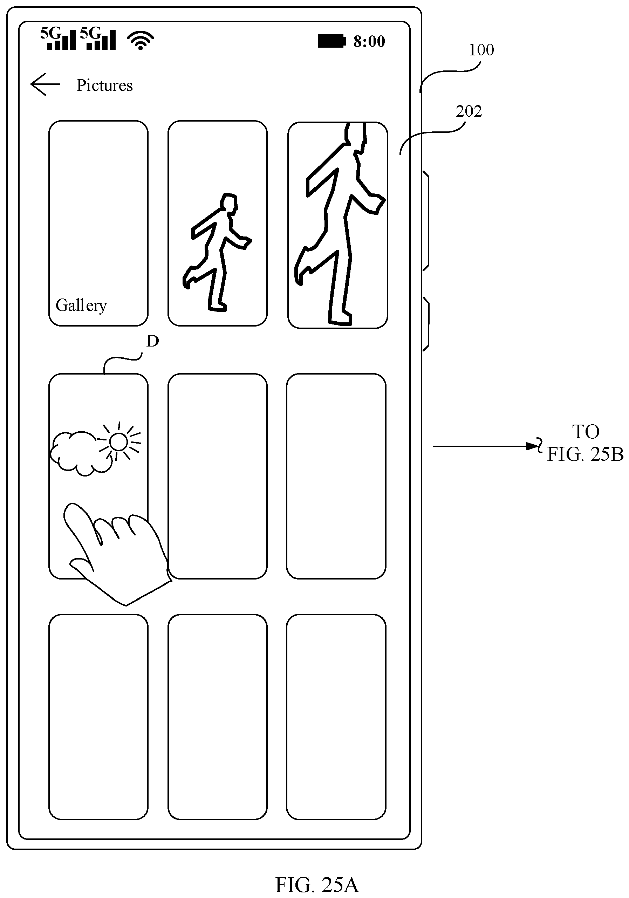

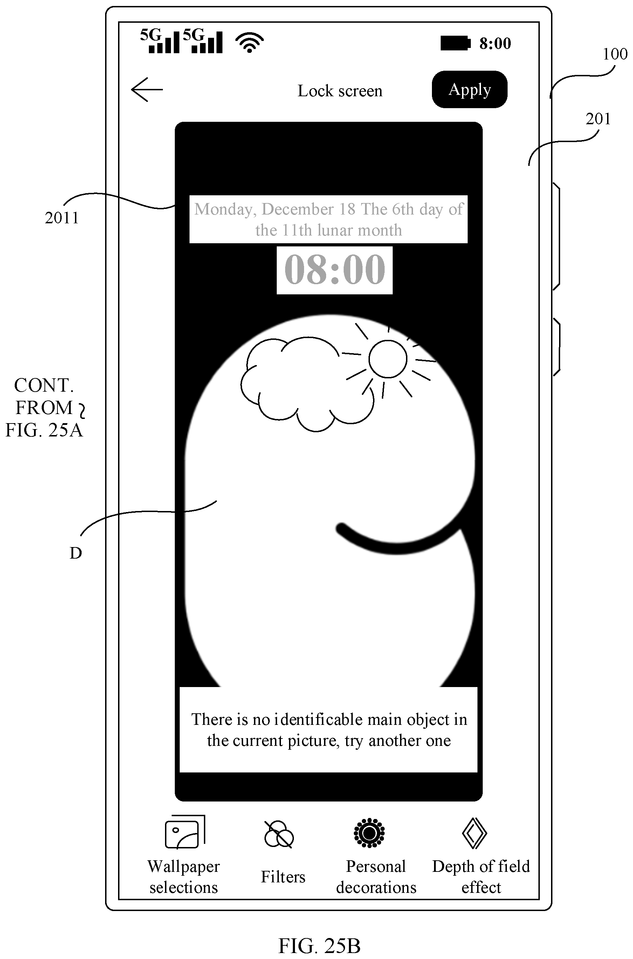

In an implementation, when there is no identificable main object in the picture, the wallpaper with the "out-of-frame" display effect may not be generated, that is, the mask frame obscures the picture. In an example, the mobile phone displays prompt information, to prompt the user the replace the picture. For example, as shown in FIG. 25A and FIG. 25B, a picture interface 202 includes a picture D. The mobile phone 100 displays a lock screen wallpaper setting interface 201 in response to a tap operation performed by the user on the picture D. The lock screen wallpaper setting interface 201 includes a preview region 2011. A picture in a preview image of a template displayed in the preview region 2011 is updated to the picture D. There is no identificable main object in the picture D. Therefore, a lock screen wallpaper generated based on the picture D does not have the "out-of-frame" display effect. Optionally, the mobile phone 100 displays prompt information "There is no identificable main object in the current picture, try another one", to prompt the user to replace the picture.

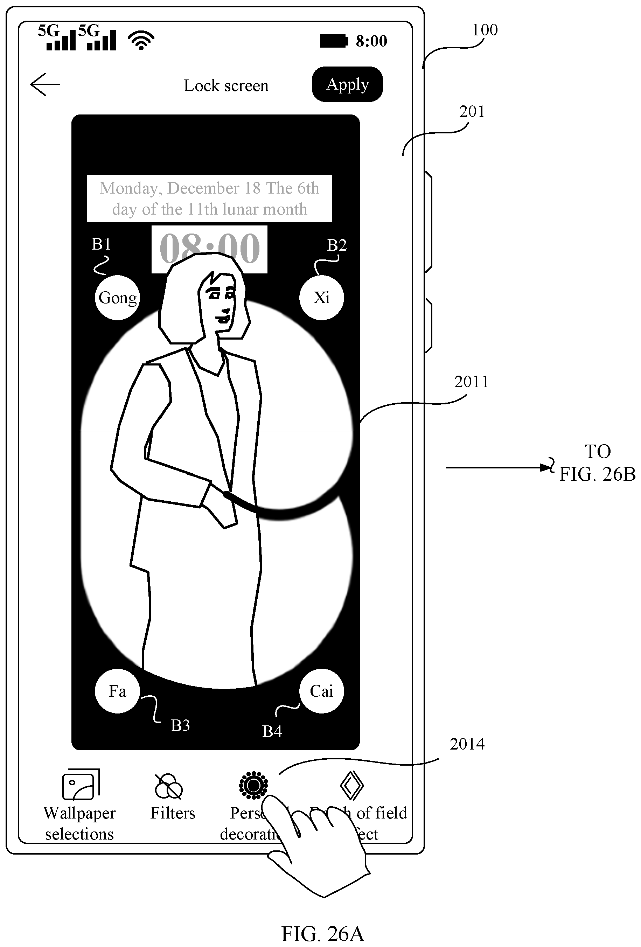

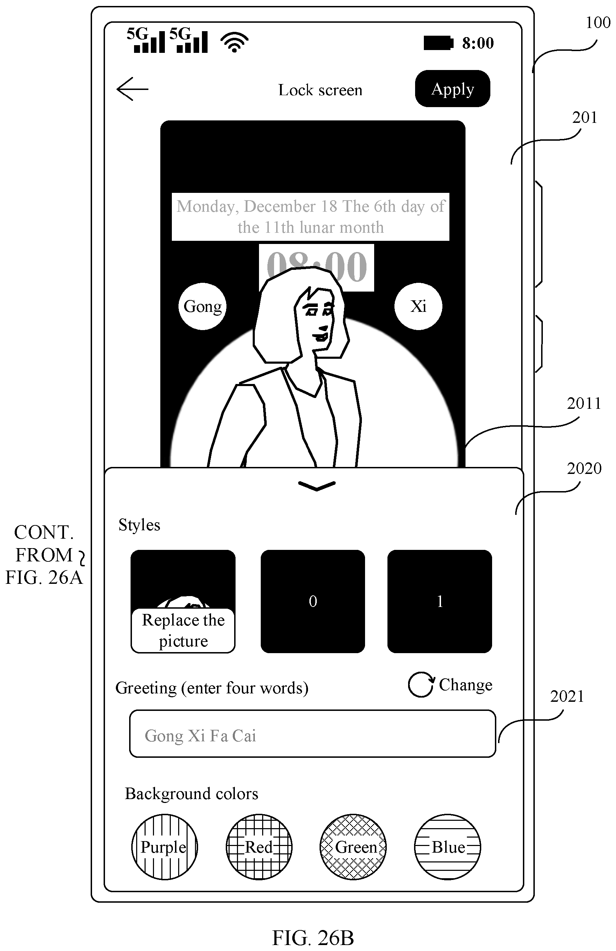

In some embodiments, the mask frame in the template of the lock screen wallpaper further includes words. The user is supported to modify these words. For example, as shown in FIG. 26A, the mobile phone 100 displays a lock screen wallpaper setting interface 201. The lock screen wallpaper setting interface 201 includes a preview region 2011. A template B is presented in the preview region 2011 as a preview image of a lock screen wallpaper. A mask frame of the template B includes a plurality of text boxes, and these text boxes are used to present text. For example, the mask frame of the template B includes a text box B1, a text box B2, a text box B3, and a text box B4, which respectively display text "Gong", "Xi", "Fa", and "Cai". The lock screen wallpaper setting interface 201 further includes a "Personal decorations" icon 2014. As shown in FIG. 26B, the mobile phone 100 displays a template editing page 2020 in the lock screen wallpaper setting interface 201 in response to a tap operation performed by the user on the "Personal decorations" icon 2014. For example, the template editing page 2020 includes a "Replace the picture" icon, a "0" icon, a "1" icon, and the like. In an example, the template editing page 2020 includes a text editing box 2021, and the text editing box 2021 is used to receive text, for example, words or numbers, entered by the user. The text received by the text editing box 2021 is displayed in the text box on the mask frame in the template.

In an example, before the text editing box 2021 does not detect the text entered by the user, default text is displayed as an example of to-be-entered text. For example, as shown in FIG. 26B, the default text in the text editing box 2021 is "Gong Xi Fa Cai". Optionally, a display format of the default text is dark stripe display.

In an example, the template editing page 2020 further includes prompt words, used to prompt a type, a format, and the like of the text entered in the text editing box 2021. For example, as shown in FIG. 26B, the template editing page 2020 includes prompt words such as "Greeting" and "Enter four words".

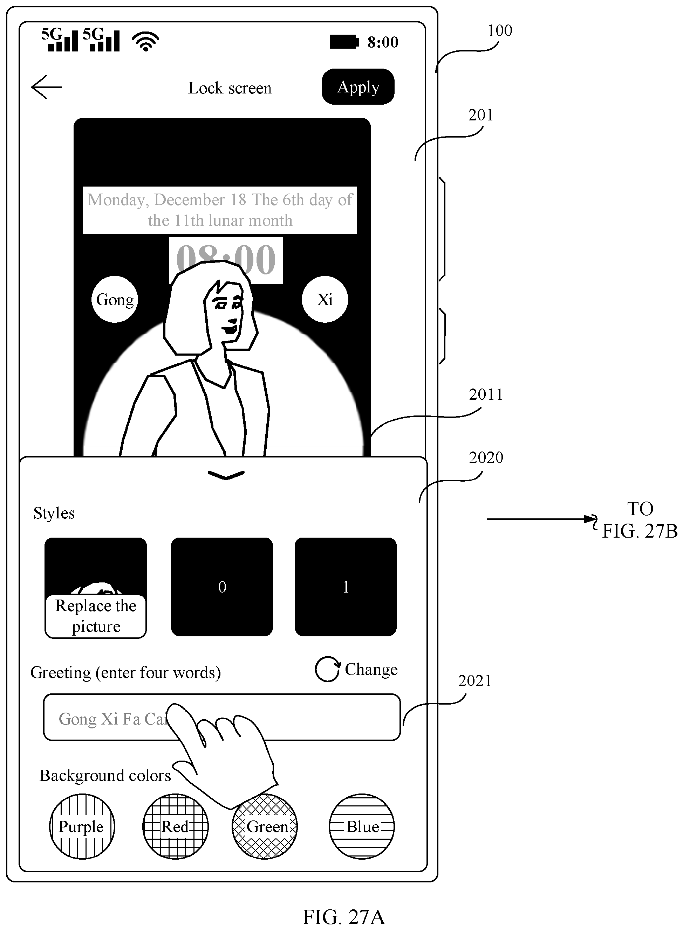

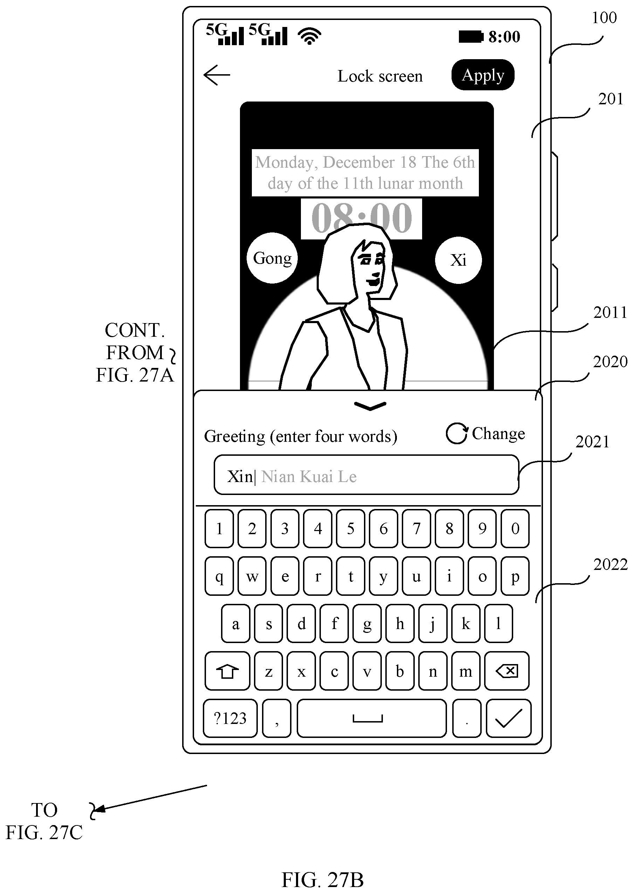

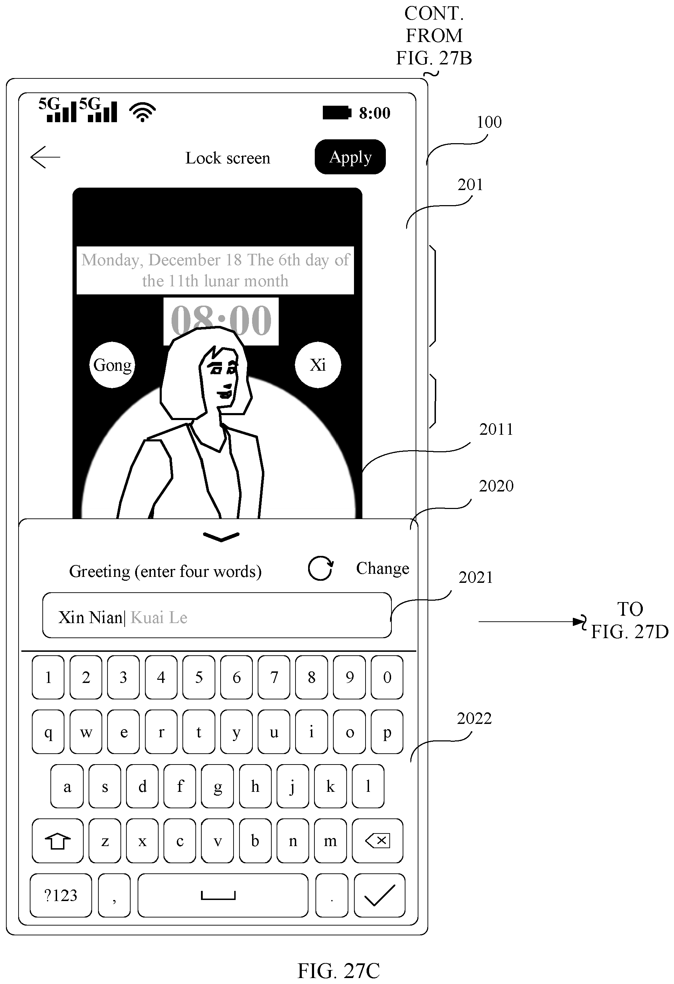

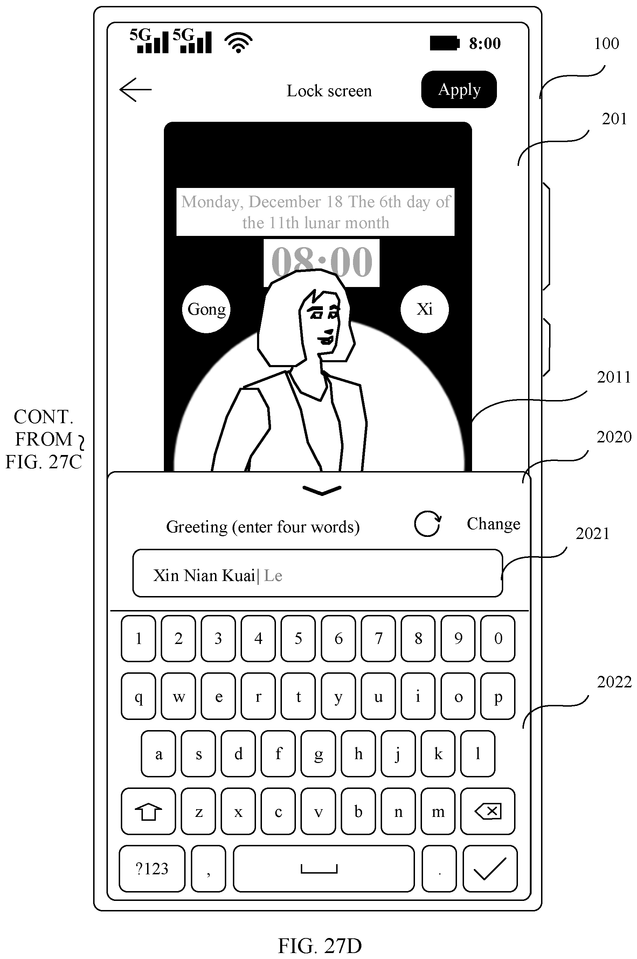

In an example, a maximum word quantity of text that is allowed to be entered in the text editing box 2021 is a preset quantity, for example, four words. When the word quantity of text entered in the text editing box 2021 is less than the preset quantity, the word quantity of text is supplemented to the preset quantity based on entered text. For example, as shown in FIG. 27A, before the mobile phone 100 does not receive the text entered by the user, the default text "Gong Xi Fa Cai" is displayed in the text editing box 2021. As shown in FIG. 27B, a keyboard 2022 is displayed in the template editing page 2020 in response to an operation that the user taps the text editing box 2021, and the user may enter the text in the text editing box 2021 by tapping the keyboard 2022. For example, the mobile phone 100 receives text "Xin" entered by the user in the text editing box 2021, and "Xin" is displayed in the text editing box 2021. The mobile phone 100 further determines a four-word phrase "Xin Nian Kuai Le" based on "Xin", and automatically displays "Nian Kuai Le" in the text editing box 2021, to supplement the word quantity of text displayed in the text editing box 2021 to four words. Optionally, a display format of the text "Nian Kuai Le" automatically supplemented by the mobile phone 100 is dark stripe display, which is used for distinguishing from the text "Nian" entered by the user. For example, as shown in FIG. 27C, when the mobile phone 100 receives text "Xin Nian" entered by the user in the text editing box 2021, "Xin Nian" is displayed in the text editing box 2021. The mobile phone 100 further automatically supplements and displays "Kuai Le" in the text editing box 2021, and a display format of "Kuai Le" is dark stripe display. As shown in FIG. 27D, when the mobile phone 100 receives text "Xin Nian Kuai" entered by the user in the text editing box 2021, "Xin Nian Kuai" is displayed in the text editing box 2021. The mobile phone 100 further automatically supplements and displays "Le" in the text editing box 2021, and a display format of "Le" is dark stripe display. In an implementation, some four-word phrases are preset in the mobile phone 100. After the mobile phone 100 receives the text entered by the user in the text editing box 2021, searching is performed on the preset four-word phrases based on entered text, and supplementary text is determined based on a successfully matched four-word phrase. In an implementation, after the mobile phone 100 receives the text entered by the user in the text editing box 2021, semantic analysis is performed on the entered text, and a corresponding four-word phrase and supplementary text are determined based on semantics of the entered text.

Optionally, in an implementation, if the corresponding four-word phrase is failed to be determined based on the entered text, the entered text is repeatedly displayed. For example, if the mobile phone 100 receives text "Liu Liu Liu" entered by the user in the text editing box 2021, but the mobile phone 100 fails to determine a corresponding four-word phrase based on the text "Liu", supplementary text "Liu Liu Liu" is displayed. For example, if the mobile phone 100 receives text "Jia You" entered by the user in the text editing box 2021, but the mobile phone 100 fails to determine a corresponding four-word phrase based on the text "Jia You", supplementary text "Jia You" is displayed.

In an implementation, a location of a cursor in the text editing box 2021 is located behind the text entered by the user, that is, the supplementary text is behind the location of the cursor. If the text entered by the user in the text editing box 2021 is received, supplementary text at a corresponding location of the entered text is replaced.

In an implementation, after the word quantity of text entered by the user in the text editing box 2021 is equal to the preset quantity, text cannot be continuously entered. Therefore, text continuously entered by the user is not displayed.

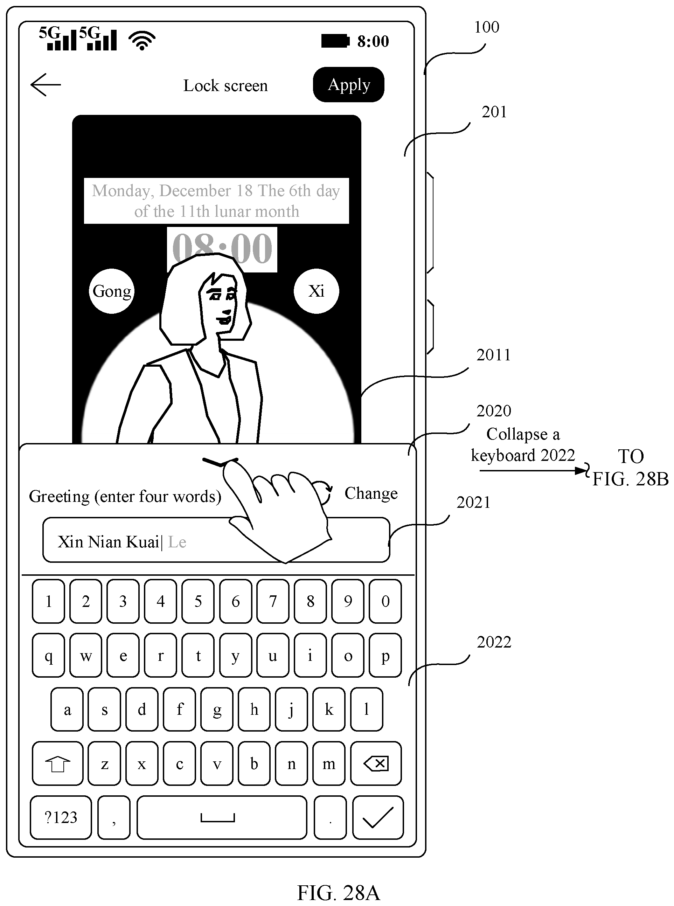

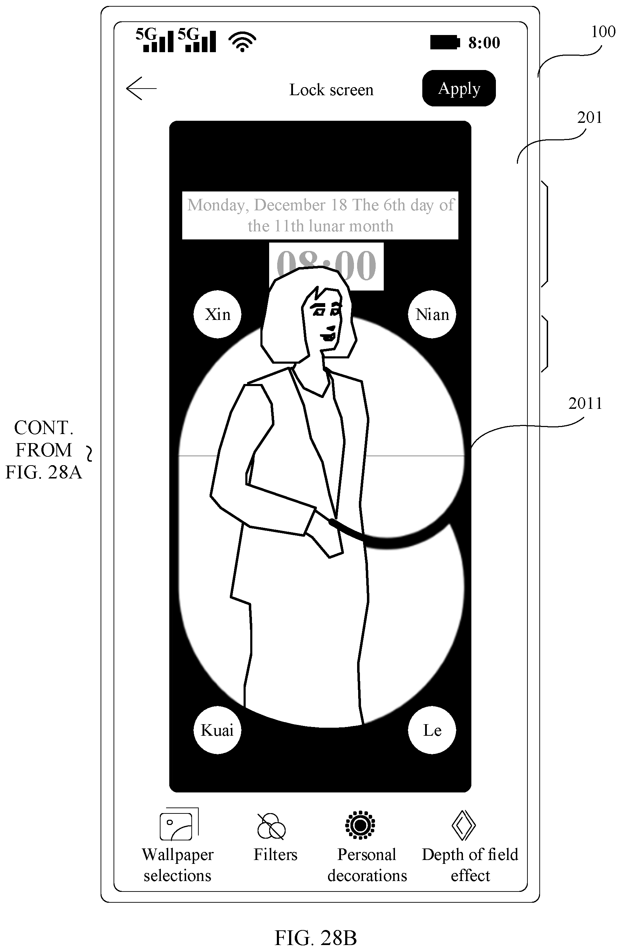

In an example, the text displayed in the text editing box 2021 is updated to the text box on the mask frame of the template B in response to an operation that the user collapses the keyboard 2022. The text displayed in the text editing box 2021 includes the text entered by the user and may further include the supplementary text. In an implementation, if the word quantity of text entered by the user is less than the preset quantity, the text in the text box on the mask frame is generated based on the text entered by the user and the supplementary text. For example, as shown in FIG. 28A and FIG. 28B, the mobile phone 100 displays a template editing page 2020 in a lock screen wallpaper setting interface 201. The template editing page 2020 includes a text editing box 2021. The text editing box 2021 is used to receive text entered by the user. The template editing page 2020 includes a keyboard 2022. The user may enter the text in the text editing box 2021 by tapping the keyboard 2022. When the mobile phone 100 receives text "Xin Nian Kuai" entered by the user in the text editing box 2021, "Xin Nian Kuai" is displayed in the text editing box 2021. The mobile phone 100 further automatically supplements and displays "Le" in the text editing box 2021, and a display format of "Le" is dark stripe display. A location of a cursor is located between "Xin Nian Kuai" and "Le". The template editing page 2020 is not displayed in response to an operation that the user collapses the keyboard 2022, and text displayed in a text box on a mask frame in a preview image presented in the preview region 2011 is updated to "Xin Nian Kuai Le", where the text displayed in the text box includes the text entered by the user and supplementary text.

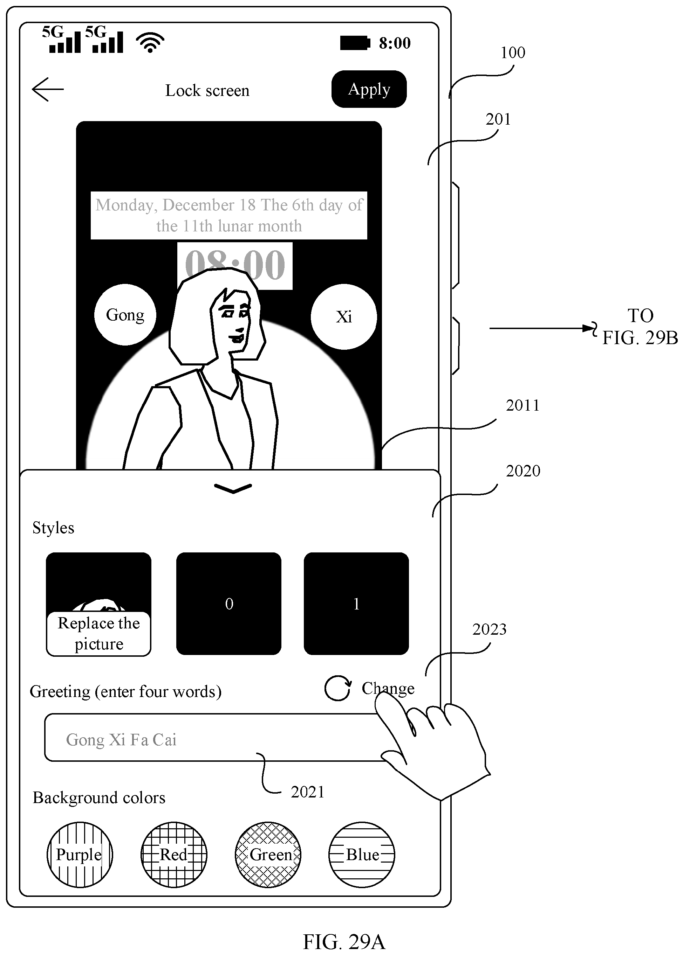

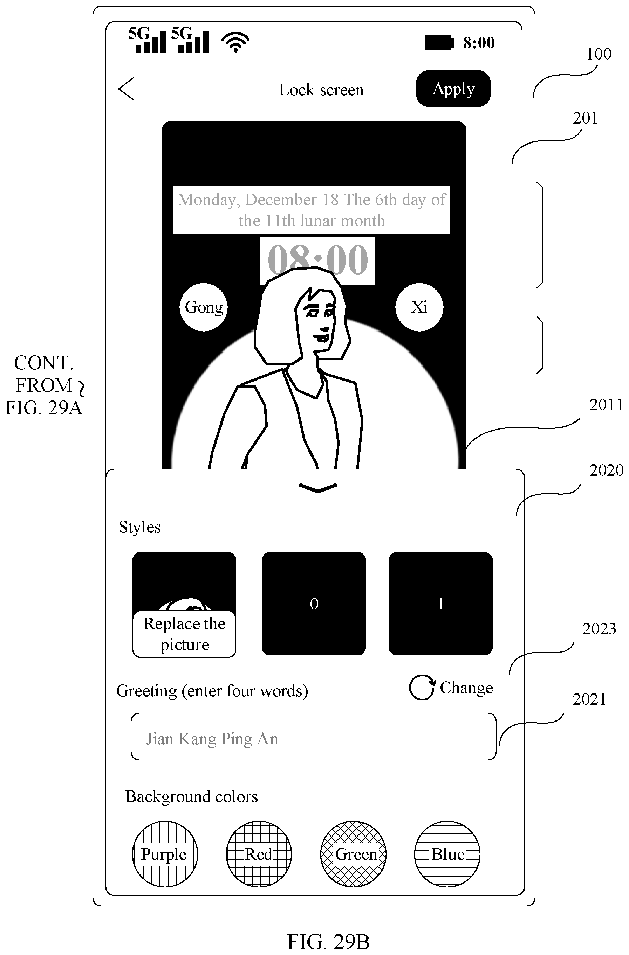

In an example, the mobile phone 100 stores a default text library, including a plurality of pieces of default text. In this way, the user is supported to replace default text displayed in the text editing box 2021. For example, as shown in FIG. 29A and FIG. 29B, the mobile phone 100 displays a template editing page 2020 in the lock screen wallpaper setting interface 201, and the template editing page 2020 includes a text editing box 2021 and a "Change" button 2023. Before the text entered by the user is not detected, default text "Gong Xi Fa Cai" is displayed in the text editing box 2021. Optionally, a display format of the default text is dark stripe display. In an implementation, after a tap operation performed by the user on the "Change" button 2023 is received, any piece of default text in the default text library is selected for update. For example, the default text displayed in the text editing box 2021 is updated to "Jian Kang Ping An" in response to a tap operation performed by the user on the "Change" button 2023. Both "Gong Xi Fa Cai" and "Jian Kang Ping An" are default text in the default text library.

In the wallpaper display method provided in the embodiments of this application, a wallpaper is generated by performing layout arrangement on a picture and a mask frame with a geometrical shape. In this case, a layer in which an upper half part of a main object in the picture is located is located above a layer in which an upper half part of the mask frame is located, and a layer in which a lower half part of the main object in the picture is located is located below a layer in which a lower half part of the mask frame is located, thereby implementing a visual effect that a part of the main object in the picture extends beyond an edge of the geometrical shape of the mask frame, that is, the "out-of-frame" display effect. Therefore, the user is provided with a more personalized and design-focused wallpaper.

In addition, the user is supported to edit a wallpaper with the "out-of-frame" display effect as required, for example, change a picture, replace a template, or zoom a main object, to meet personalized customization requirements of the user.

It may be understood that to implement the foregoing functions, the electronic device provided in the embodiments of this application includes corresponding hardware structures and/or software modules for performing the functions. A person skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the foregoing electronic device may be divided into functional modules based on the foregoing method examples. For example, each functional module may be obtained through division for each corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

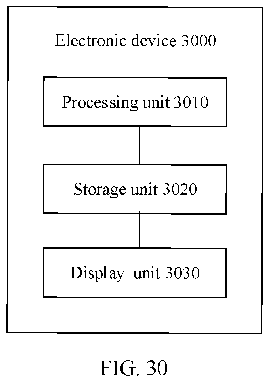

In an example, FIG. 30 is a schematic diagram of a possible structure of the electronic device in the foregoing embodiments. An electronic device 3000 includes a processing unit 3010, a storage unit 3020, and a display unit 3030.

The processing unit 3010 is configured to control and manage actions of the electronic device 3000, The storage unit 3020 is configured to store program code and data of the electronic device 3000, and the processing unit 3010 invokes the program code stored in the storage unit 3020 to perform the steps in the foregoing method embodiments. The display unit 3030 is configured to display a user interface of the electronic device 3000, for example, a lock screen interface, a home screen interface, or a setting interface.

Certainly, unit modules in the electronic device 3000 include but are not limited to the processing unit 3010, the storage unit 3020, and the display unit 3030. For example, the electronic device 3000 may further include a communication unit, a power unit, and the like. The communication unit is used by the electronic device 3000 to communicate with another electronic device. The power unit is configured to supply power to the electronic device 3000.

The processing unit 3010 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logical device, a transistor logical device, a hardware component, or any combination thereof. The storage unit 3020 may be a memory. The display unit 3030 may be a display screen or the like.

For example, the processing unit 3010 is a processor (the processor 110 shown in FIG. 4), the storage unit 3020 may be a memory (the internal memory 121 shown in FIG. 4), and the display unit 3030 may be a display screen (the display screen 194 shown in FIG. 4). The electronic device 3000 provided in this embodiment of this application may be the electronic device 100 shown in FIG. 4. The processor, the memory, the display screen, and the like may be connected together, for example, by using a bus. The processor invokes the program code stored in the memory to perform the steps in the foregoing method embodiments.

An embodiment of this application further provides a chip system. The chip system includes at least one processor and at least one interface circuit. The processor and the interface circuit may be interconnected by using a line. For example, the interface circuit may be configured to receive a signal from another apparatus (for example, the memory of the electronic device). For another example, the interface circuit may be configured to send a signal to another apparatus (for example, the processor). For example, the interface circuit may read instructions stored in the memory and send the instructions to the processor. When the instructions are executed by the processor, the electronic device may be enabled to perform the steps in the foregoing embodiments. Certainly, the chip system may further include another discrete device. This is not specifically limited in this embodiment of this application.

An embodiment of this application further provides a computer-readable storage medium. The computer-readable storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

It can be clearly learned by a person skilled in the art from the foregoing descriptions of the implementations that for convenience and brevity of description, only division into the foregoing functional modules is used as an example for description. During actual application, the foregoing functions may be allocated to different functional modules for implementation as required, in other words, an internal structure of an apparatus is divided into different functional modules, to complete all or some of the functions described above.

In the several embodiments provided in this application, it should be understood that the disclosed apparatus and method may be implemented in other manners. For example, the apparatus embodiments described above are merely examples. For example, division of the modules or the units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separated, and parts displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The foregoing storage medium includes various media that can store program code, for example, a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A wallpaper display method, comprising:
displaying a first user interface, wherein the first user interface comprises an icon of a first template;
displaying a second user interface in response to an operation that a user selects the first template, wherein the second user interface comprises a preview region and a first control, the preview region comprises a preview image of a first wallpaper, the first wallpaper comprises a first main object and a first mask frame, a first part of the first main object obscures the first mask frame, and a second part of the first main object is obscured by the first mask frame;
setting the first wallpaper as a lock screen wallpaper in response to an operation that the user selects the first control; and
displaying a lock screen interface in response to a lock operation of the user, wherein the lock screen interface comprises the lock screen wallpaper.

2. The method according to claim 1, wherein the preview region further comprises a clock icon; and
the first part of the first main object obscures the clock icon; or
the first part of the first main object is obscured by the clock icon.

3. The method according to claim 2, wherein
the first part of the first main object obscures the clock icon when a highest point of the first main object is not higher than a horizontal center line of the clock icon; or
the first part of the first main object is obscured by the clock icon when a highest point of the first main object is higher than a horizontal center line of the clock icon.

4. The method according to claim 3, wherein the method further comprises:
zooming in the first main object for display in response to a zoom-in operation performed by the user in the preview region, wherein
the first part of the first main object is obscured by the first mask frame or the first part of the first main object is obscured by the clock icon when the highest point of the first main object is higher than the horizontal center line of the clock icon.

5. The method according to claim 3, wherein the method further comprises:
moving the first main object to a first location in response to a movement operation performed by the user in the preview region, wherein
the first part of the first main object is obscured by the first mask frame or the first part of the first main object is obscured by the clock icon when the highest point of the first main object is higher than the horizontal center line of the clock icon.

6. The method according to any one of claims 1-5, wherein the method further comprises:
zooming out the first main object for display in response to a zoom-out operation performed by the user in the preview region, wherein a minimum size to which the first main object is zoomed out is that any edge of a first picture comprising the first main object is externally in contact with a preset rectangular frame, and a location and a size of the preset rectangular frame are determined based on a geometrical shape of the first mask frame.

7. The method according to any one of claims 4-6, wherein
the first part of the first main object is obscured by the first mask frame when the first main object is in contact with a preset region on the first mask frame.

8. The method according to any one of claims 1-7, wherein the first wallpaper is generated based on the first mask frame and the first picture comprising the first main object.

9. The method according to claim 8, wherein the first wallpaper comprises a first layer, a second layer, a third layer, and a fourth layer, the first layer comprises the first picture, the second layer comprises a first part of the first mask frame, the third layer comprises the first main object, the fourth layer comprises a second part of the first mask frame, and the geometrical shape formed by the first part and the second part of the first mask frame is used to accommodate a part of the first main object or the entire first main object.

10. The method according to claim 9, wherein
the third layer is located above the second layer and the fourth layer is located above the third layer when the first part of the first main object obscures the first mask frame; or
the second layer and the fourth layer are located above the third layer when the first part of the first main object is obscured by the first mask frame.

11. The method according to claim 9 or 10, wherein the first wallpaper comprises a fifth layer, and the fifth layer comprises the clock icon; and
the third layer is located above the fifth layer when the first part of the first main object obscures the clock icon; or
the fifth layer is located above the third layer when the first part of the first main object is obscured by the clock icon.

12. The method according to any one of claims 1-11, wherein the method further comprises:
updating the first mask frame in the first wallpaper to a second mask frame in response to a selection operation performed by the user on the second mask frame.

13. The method according to any one of claims 1-11, wherein the method further comprises:
displaying a preview image of a second wallpaper in the preview region in response to a selection operation performed by the user on a second picture, wherein the second wallpaper comprises a second main object and the first mask frame, a first part of the second main object obscures the first mask frame, and a second part of the second main object is obscured by the first mask frame.

14. The method according to claim 13, wherein the method further comprises:
zooming out the second main object in the second wallpaper to a minimum size if a distance between a highest point of the second main object in the second picture and an upper edge of the second picture is less than a preset value, wherein the minimum size is that any edge of the second picture is externally in contact with a preset rectangular frame, and a location and a size of the preset rectangular frame are determined based on a geometrical shape of the first mask frame.

15. The method according to claim 14, wherein the method further comprises:
zooming in the second main object for display in response to a zoom-in operation performed by the user in the preview region, wherein the first part of the second main object that is zoomed in obscures the first mask frame.

16. The method according to claim 13, wherein the method further comprises:
displaying first prompt information if there is no identifiable main object in the second picture, wherein the first prompt information is used to prompt the user to replace the picture in the second wallpaper.

17. The method according to any one of claims 1-16, wherein the first mask frame comprises a text box, and the method further comprises:
generating supplementary text based on text entered by the user in a text editing box; and
generating text in the text box based on the text entered by the user in the text editing box and the supplementary text.

18. The method according to any one of claims 1-17, wherein the first main object comprises a character, an animal, a plant, or a building.

19. The method according to any one of claims 1-18, wherein the method further comprises:
displaying a third user interface, wherein the third user interface comprises the icon of the first template;
displaying a fourth user interface in response to an operation that the user selects the first template, wherein the fourth user interface comprises a second preview region and a second control, and the second preview region comprises the preview image of the first wallpaper;
setting the first wallpaper as a home screen wallpaper in response to an operation that the user selects the second control; and
displaying a home screen interface in response to an operation that the user returns to a home screen, wherein the home screen interface comprises the home screen wallpaper.

20. An electronic device, comprising:
one or more processors;
a display screen; and
a memory, wherein
the memory stores one or more computer programs, the one or more computer programs comprise instructions, and when the instructions are executed by the electronic device, the electronic device is enabled to perform the method according to any one of claims 1-19.

21. A computer-readable storage medium, comprising computer instructions, wherein when the computer instructions are run on an electronic device, the electronic device is enabled to perform the method according to any one of claims 1-19.
